# EUROPEAN PATENT APPLICATION

(11) **EP 4 542 387 A1**
(43) Date of publication of application: **23.04.2025**
(21) Application number: 23856209.4
(22) Date of filing: 13.06.2023
(51) Int. Cl.: G06F 9/50

(54) **METHOD FOR SEGMENTING COMPUTING TASK, AND RELATED APPARATUS**

(30) Priority: 24.08.2022 CN 202211020380
(71) Applicant: Huawei Technologies Co., Ltd., Shenzhen, Guangdong 518129 (CN)
(72) Inventor: CAO, Youlong, Shenzhen, Guangdong 518129 (CN); QIN, Yi, Shenzhen, Guangdong 518129 (CN); CHEN, Erkai, Shenzhen, Guangdong 518129 (CN); XU, Rui, Shenzhen, Guangdong 518129 (CN)
(74) Representative: Gill Jennings & Every LLP
(86) International application number: PCT/CN2023/100037
(87) International publication number: WO 2024/041117

(57) **Abstract**

A computing task segmentation method and a related apparatus are provided, and may be applied to an extended reality XR service or another low-latency service. The method includes: obtaining an amount of to-be-transmitted data and a computation amount of a terminal device that correspond to a first computing task, where the first computing task is obtained by segmenting a computing task of a neural network model based on a segmentation point; determining that the segmentation point is a target segmentation point based on the amount of to-be-transmitted data, the computation amount, and a status of a channel between the terminal device and a radio access network device; and sending indication information to the terminal device, where the indication information indicates the target segmentation point. The method may be performed by a network device, for example, the radio access network device. Because the network device may obtain the status of the channel between the terminal device and the radio access network device in real time, the target segmentation point may be effectively adjusted in time based on a change of the status of the channel, so that the computing task can be properly segmented, to meet different requirements and improve user experience.

## Description

This application claims priority to Chinese Patent Application No. 202211020380.6, filed with the China National Intellectual Property Administration on August 24, 2022, and entitled "COMPUTING TASK SEGMENTATION METHOD AND RELATED APPARATUS", which is incorporated herein by reference in its entirety.

### TECHNICAL FIELD

This application relates to the communication field, and more specifically, to a computing task segmentation method and a related apparatus.

### BACKGROUND

With development of technologies, artificial intelligence (artificial intelligence, AI) is increasingly widely applied to many services (such as an extended reality (extended reality, XR) service, an unmanned driving service, and a remote medical service).

The XR service is used as an example. An XR terminal may transmit an image or a video to a server in an uplink manner, and the server may perform target detection and recognition on content in the image or the video by using a neural network model like a deep neural network (deep neural network, DNN) model. To reduce an amount of data uploaded by the XR terminal, the XR terminal can preprocess an image or a video to be uploaded and upload data obtained through the preprocessing to the server. The neural network model includes a plurality of neural network layers. If the XR terminal performs preprocessing, a computing task corresponding to the neural network model needs to be segmented.

How to properly segment the computing task of the neural network model becomes an urgent technical problem to be resolved.

### SUMMARY

This application provides a computing task segmentation method and a related apparatus, to properly segment a computing task of a neural network model.

According to a first aspect, this application provides a computing task segmentation method. The method may be applied to a radio access network device, for example, a base station or an access point. The method may be performed by the radio access network device, or may be performed by a component (for example, a chip, a chip system, or a processor) configured in the radio access network device, or may be implemented by a logical module or software that can implement all or some functions of a network device. This is not limited in this application.

The method includes: obtaining an amount of to-be-transmitted data and a computation amount of a terminal device that correspond to a first computing task, where the first computing task is obtained by segmenting a computing task of a neural network model based on a segmentation point; determining that the segmentation point is a target segmentation point based on the amount of to-be-transmitted data, the computation amount, and a status of a channel between the terminal device and the radio access network device; and sending indication information to the terminal device, where the indication information indicates the target segmentation point.

The computing task can be defined based on a service. Different services have different computing tasks. The computing task may be executed by using the neural network model.

The segmentation point is used to segment the computing task of the neural network model, and one segmentation point may be used to segment the computing task of the neural network model into two computing tasks. That the segmentation point is used to segment the computing task of the neural network model may be understood as follows: The neural network model includes a plurality of neural network layers, the segmentation point may be located between any two adjacent neural network layers of the plurality of neural network layers, and the plurality of neural network layers are segmented into two parts by using the segmentation point as a node, where each part includes one or more neural network layers. Computing tasks corresponding to one or more neural network layers included in the two parts are two computing tasks obtained after the computing task of the neural network model is segmented.

It may be understood that the computing task of the neural network model may alternatively be segmented into more computing tasks. For example, two or more segmentation points may be used for segmentation. A specific process is described above, and details are not described again.

**In** this application, the segmentation point may be used to segment the computing task of the neural network model into two computing tasks, so that the two computing tasks are allocated to different devices for execution. As a location of the segmentation point changes, the two computing tasks obtained through segmentation also change accordingly. To find a reasonable segmentation point, the neural network model may be segmented at different locations to meet different requirements. In this specification, for ease of differentiation and description, a segmentation point that is determined to be used to segment a computing task of a service is denoted as a target segmentation point, and it is assumed that a segmentation point corresponding to the first computing task is the target segmentation point.

For ease of differentiation and description, the two computing tasks obtained after the computing task of the neural network model is segmented based on the target segmentation point are denoted as a first computing task and a second computing task, and the first computing task is a computing task allocated to the terminal device. The target segmentation point may be determined based on the amount of to-be-transmitted data and the computation amount that correspond to the first computing task, and the status of the channel between the terminal device and the radio access network device.

The amount of to-be-transmitted data may be a size of data that is obtained after the terminal device executes a computing task (for example, the first computing task) and that needs to be transmitted to another device (for example, a first device described below), and may be described by using a dimension like a bit or a byte. The computation amount may be a quantity of floating-point operations that need to be performed by the terminal device to execute a computing task (for example, the first computing task), and may be described by using a parameter like the quantity of floating-point operations. The status of the channel between the terminal device and the radio access network device may be described by using parameters such as a signal to interference and noise ratio (signal to interference and noise ratio, SINR), reference signal receiving power (reference signal receiving power, RSRP), and a channel quality indicator (channel quality indicator, CQI). A transmission rate for data transmission through the channel may be determined based on the status of the channel between the terminal device and the radio access network device.

It should be understood that determining the target segmentation point based on the amount of to-be-transmitted data and the computation amount that correspond to the first computing task, and the status of the channel between the terminal device and the radio access network device does not mean that the target segmentation point is determined based on only the amount of to-be-transmitted data and the computation amount that correspond to the first computing task, and the status of the channel between the terminal device and the radio access network device. As described above, as the location of the segmentation point changes, the two computing tasks obtained through segmentation also change accordingly. Therefore, in a possible implementation, the radio access network device may separately obtain, based on segmentation points at different locations, amounts of to-be-transmitted data and computation amounts that correspond to the computing task of the terminal device, and statuses of channels that are obtained through segmentation based on the segmentation points at different locations, to determine the target segmentation point. It may be understood that, if the segmentation point used to obtain the first computing task through segmentation is the target segmentation point, a process of determining the target segmentation point is independent of factors such as the amount of to-be-transmitted data and the computation amount that correspond to the first computing task, and the status of the channel.

Because the radio access network device may determine the target segmentation point based on the amount of to-be-transmitted data and the computation amount of the terminal device that correspond to the first computing task, and the status of the channel between the terminal device and the radio access network device, analysis may be performed from a plurality of perspectives such as transmission and computation power consumption, and transmission and computation latencies, to properly determine the target segmentation point based on different requirements. The radio access network device may obtain the status of the channel between the terminal device and the radio access network device in real time, and a change of the status of the channel may be sensed in milliseconds. Therefore, the target segmentation point can be effectively adjusted in time based on the change of the status of the channel, so that the target segmentation point can be adjusted with the change of the status of the channel.

For example, in a service that has a high requirement on a latency and reliability, using this solution can reduce a transmission latency and improve transmission reliability. For example, in an XR service, frame freezing may be reduced. For another example, in an automatic driving service and a remote medical service, security of the automatic driving service and the remote medical service may be improved by reducing a latency, improving transmission reliability, and the like.

For another example, in a service that is sensitive to power consumption or a service in which a terminal device that is sensitive to power consumption is used, the method can be used to reduce power consumption of the terminal device.

In addition, the radio access network device may comprehensively obtain a status of a terminal device in a coverage area of the radio access network device, for example, interference between a plurality of terminal devices in a same cell, or bandwidth needed by a plurality of terminal devices in a same cell to simultaneously transmit a service. The radio access network device may control power consumption of data transmission of the terminal device. Therefore, power consumption and interference may also be reduced by properly selecting the target segmentation point, to meet a requirement of a service that has a high requirement on power consumption. The radio access network device may further consider total bandwidth in a cell, and adjust transmission power consumption of the terminal device based on a rate requirement of a model segmentation point, to implement optimal system-level service transmission.

In conclusion, it can be learned that, according to the method provided in this application, the target segmentation point can be properly selected, to meet different requirements and improve user experience.

The following provides examples of several possible implementations of obtaining the amount of to-be-transmitted data and the computation amount of the terminal device that correspond to the first computing task.

In a first possible implementation, the obtaining an amount of to-be-transmitted data and a computation amount of a terminal device that correspond to a first computing task includes: receiving first information from the terminal device, where the first information indicates the amount of to-be-transmitted data and the computation amount.

That is, the radio access network device may directly obtain, from the terminal device, the amount of to-be-transmitted data and the computation amount that correspond to the first computing task.

In a second possible implementation, the obtaining an amount of to-be-transmitted data and a computation amount of a terminal device that correspond to a first computing task includes: receiving second information from the first device, where the second information indicates the amount of to-be-transmitted data and the computation amount, and the first device is another terminal device or a server.

The first device may be a device configured to execute the second computing task. In different network architectures, first devices may be different devices. For example, in a network architecture including a terminal device, a network, and a server, the first device may be the server, and in a network architecture including a terminal device, a network, and a terminal device, the first device may be another terminal device.

The radio access network device may alternatively obtain, from the first device, the amount of to-be-transmitted data and the computation amount that correspond to the first computing task. Because the first device is configured to execute the second computing task, the first device may pre-configure or construct the neural network model. Therefore, the first device may learn of a neural network layer corresponding to the first computing task, and therefore may learn of the amount of to-be-transmitted data and the computation amount that correspond to the first computing task.

In a third possible implementation, the obtaining an amount of to-be-transmitted data and a computation amount of a terminal device that correspond to a first computing task includes: receiving third information from the first device, where the third information indicates an amount of to-be-transmitted data and a computation amount of the first device that correspond to the second computing task, and the first device is another terminal device or server; and determining, based on the third information, the amount of to-be-transmitted data and the computation amount that correspond to the first computing task. The first computing task and the second computing task are obtained by segmenting the computing task of the neural network model based on the segmentation point.

The radio access network device may alternatively obtain, from the first device, the amount of to-be-transmitted data and the computation amount that correspond to the second computing task. Because the first device is configured to execute the second computing task, the first device may preconfigure or construct the neural network model, and therefore may learn of the amount of to-be-transmitted data and the computation amount that correspond to the second computing task. The radio access network device may infer, based on the neural network model and the amount of to-be-transmitted data and the computation amount that correspond to the second computing task and that are received from the first device, the amount of to-be-transmitted data and the computation amount that correspond to the first computing task.

As described above, the radio access network device may separately obtain, based on segmentation points at different locations, amounts of to-be-transmitted data and computation amounts that correspond to the computing task of the terminal device, and statuses of channels that are obtained through segmentation based on the segmentation points, to determine the target segmentation point. In this implementation, the radio access network device may obtain, based on the three possible implementations provided above, the amounts of to-be-transmitted data and the computation amounts that are obtained through segmentation based on the segmentation points at different locations and that correspond to the computing task of the terminal device.

With reference to the first aspect, in some possible implementations of the first aspect, the target segmentation point is determined based on at least one of a latency or power consumption. The latency is time needed by the terminal device to execute the first computing task, and the power consumption is power consumption needed by the terminal device to execute the first computing task.

The latency includes a computation latency and a transmission latency. The computation latency is time needed by the terminal device to complete the computation amount of the first computing task, and the transmission latency is time needed by the terminal device to transmit data obtained by executing the first computing task. The computation latency may be determined based on the computation amount of the first computing task and a computing capability of the terminal device. The transmission latency may be determined based on the amount of to-be-transmitted data of the first computing task and the status of the channel between the terminal device and the radio access network device, for example, may be determined based on the amount of to-be-transmitted data of the first computing task and the rate of transmission between the terminal device and the radio access network device.

The power consumption needed by the terminal device to execute the first computing task includes computation power consumption and transmission power consumption that are needed by the terminal device to execute the first computing task. The computation power consumption may be determined based on the computation amount of the first computing task, for example, is in direct proportion to the computation amount. The transmission power consumption may be determined based on the amount of to-be-transmitted data of the first computing task and the status of the channel between the terminal device and the radio access network device.

The radio access network device may determine the target segmentation point based on the latency, so that a latency caused when the two computing tasks obtained through segmentation based on the target segmentation point are respectively allocated to the terminal device and the first device for execution meets a preset condition. Alternatively, the radio access network device may determine the target segmentation point based on the power consumption, so that power consumption caused when the two computing tasks obtained through segmentation based on the target segmentation point are respectively allocated to the terminal device and the first device for execution meets another preset condition. Alternatively, the radio access network device may determine the target segmentation point by comprehensively considering the latency and the power consumption, so that a latency and power consumption that are caused when the two computing tasks obtained through segmentation based on the target segmentation point are respectively allocated to the terminal device and the first device for execution meet still another preset condition. Whether the radio access network device determines the target segmentation point based on the latency, the power consumption, or the latency and the power consumption may be determined based on a requirement.

Optionally, the target segmentation point is determined based on the latency; and the determining that the segmentation point is a target segmentation point based on the amount of to-be-transmitted data, the computation amount, and a status of a channel between the terminal device and the radio access network device includes: determining the latency based on computing capability information of the terminal device, the amount of to-be-transmitted data, the computation amount, and the status of the channel; and determining that the segmentation point is the target segmentation point based on the latency.

As described above, the latency includes the computation latency and the transmission latency. The computation latency may be determined based on the computing capability information of the terminal device and the computation amount, and the transmission latency may be determined based on the amount of to-be-transmitted data and the status of the channel. Therefore, the radio access network device may determine the latency based on the computing capability information of the terminal device, the amount of to-be-transmitted data, the computation amount, and the status of the channel, and then determine the target segmentation point based on the latency.

A possible implementation of determining the target segmentation point based on the latency is as follows: If a latency of a computing task (for example, the first computing task) determined based on a segmentation point is less than a preset threshold (denoted as a first preset threshold for ease of differentiation and description), the segmentation point corresponding to the computing task is determined as the target segmentation point.

In another possible implementation of determining the target segmentation point based on the latency, the computing task of the neural network model is segmented based on different segmentation points, to obtain computing tasks corresponding to the different segmentation points, and a segmentation point corresponding to a computing task (for example, the first computing task) with a lowest latency is determined as the target segmentation point.

In a service that has a high requirement on a latency and reliability, determining the target segmentation point based on the latency can reduce a transmission latency and improve transmission reliability. For example, in an XR service, frame freezing may be reduced. For another example, in an automatic driving service and a remote medical service, security of the automatic driving service and the remote medical service may be improved by reducing a latency, improving transmission reliability, and the like.

Optionally, the target segmentation point is determined based on the power consumption; and the determining that the segmentation point is a target segmentation point based on the amount of to-be-transmitted data, the computation amount, and a status of a channel between the terminal device and the radio access network device includes: determining the power consumption based on the amount of to-be-transmitted data, the computation amount, and the status of the channel; and determining that the segmentation point is the target segmentation point based on the power consumption.

As described above, the power consumption includes the computation power consumption and the transmission power consumption. The computation power consumption may be determined based on the computation amount, and the transmission power consumption may be determined based on the amount of to-be-transmitted data and the status of the channel. Therefore, the radio access network device may determine the power consumption based on the amount of to-be-transmitted data, the computation amount, and the status of the channel, and then determine the target segmentation point based on the power consumption.

A possible implementation of determining the target segmentation point based on the power consumption is as follows: If power consumption of a computing task (for example, the first computing task) determined based on the segmentation point is less than a preset threshold (denoted as a second preset threshold for ease of differentiation and description), the segmentation point corresponding to the computing task is determined as the target segmentation point.

In another possible implementation of determining the target segmentation point based on the power consumption, the computing task of the neural network model is segmented based on different segmentation points, to obtain computing tasks corresponding to the different segmentation points, and a segmentation point corresponding to a computing task (for example, the first computing task) with lowest power consumption is determined as the target segmentation point.

In a service that is sensitive to power consumption or a service in which a terminal device that is sensitive to power consumption is used, determining the target segmentation point based on the power consumption can reduce power consumption of the terminal device. In addition, the radio access network device may reduce mutual interference between a plurality of terminal devices by controlling transmission power consumption of the terminal device, and may further implement optimal system-level service transmission based on total bandwidth in a cell.

Optionally, the target segmentation point is determined based on the latency and the power consumption; and the determining that the segmentation point is a target segmentation point based on the amount of to-be-transmitted data, the computation amount, and a status of a channel between the terminal device and the radio access network device includes: determining the latency and the power consumption based on computing capability information of the terminal device, the amount of to-be-transmitted data, the computation amount, and the status of the channel; and determining the segmentation point as the target segmentation point based on the latency and the power consumption.

In a possible design, different weights are respectively applied to the latency and the power consumption, to obtain a weighted sum of the latency and the power consumption. The radio access network device may determine the target segmentation point based on the weighted sum of the latency and the power consumption.

A possible implementation of determining the target segmentation point based on the weighted sum of the latency and the power consumption is as follows: If a weighted sum of a latency and power consumption of a computing task (for example, the first computing task) determined based on a segmentation point is less than a preset threshold (denoted as a third preset threshold for ease of differentiation and description), the segmentation point corresponding to the computing task is determined as the target segmentation point.

Another possible implementation of determining the target segmentation point based on the weighted sum of the latency and the power consumption is as follows: The computing task of the neural network model is segmented based on different segmentation points, to obtain computing tasks corresponding to the different segmentation points, and a segmentation point corresponding to a computing task (for example, the first computing task) with a lowest weighted sum of the latency and the power consumption as the target segmentation point.

The radio access network device may consider both the latency and the power consumption, and apply different weights to the latency and the power consumption to determine the target segmentation point, to meet different requirements and improve user experience.

It can be learned that the computation latency is related to the computing capability of the terminal device. Therefore, when the target segmentation point is determined based on the latency, or the target segmentation point is determined based on the latency and the power consumption, the radio access network device may further obtain the computing capability information of the terminal device. The computing capability information may be used to represent a computing capability of the terminal device.

In a possible design, the computing capability information includes at least one of time needed by the terminal device to complete a predefined test task or the computing capability of the terminal device.

The predefined test task includes a task executed based on at least one of a predefined test neural network model, a predefined computation type, or predefined input data. In other words, different terminal devices may perform tests based on a same test task, to obtain time needed by the different terminal devices to complete the same test task, and then computing capabilities of the different terminal devices may be deduced based on the time.

The computing capability may alternatively be represented by a quantity of floating-point operations per second (floating-point operations per second, FLOPS) of the terminal device. The quantity of floating-point operations per second is a peak value of quantities of floating-point operations that can be performed per second. The terminal device may report the quantity of floating-point operations per second to the radio access network device.

By predefining a test task, each terminal device may perform a test based on a same test task, so that computing capabilities of different terminal devices are distinguished by time of completing the test task. This facilitates understanding of the computing capabilities of the different terminal devices.

A possible implementation in which the terminal device reports the quantity of floating-point operations per second is directly reporting the quantity of floating-point operations per second. A possible implementation in which the terminal device reports the quantity of floating-point operations per second is reporting information identifying the quantity of floating-point operations per second.

For example, the information identifying the quantity of floating-point operations per second may be a capability level. Different floating-point operations per second may correspond to different capability levels. A correspondence between the quantity of floating-point operations per second and the capability level may be predefined, for example, predefined in a protocol. The terminal device may report, to the radio access network device based on the correspondence, the capability level corresponding to the quantity of floating-point operations per second.

Different computing capability information is defined, so that the radio access network device can more comprehensively understand the computing capability of the terminal device, thereby helping properly determine the target segmentation point.

Optionally, the method further includes: receiving the computing capability information from the terminal device.

By receiving the computing capability information from the terminal device, the radio access network device may accurately estimate the computation latency based on the computing capability of the terminal device, thereby helping properly determine the target segmentation point.

According to a second aspect, this application provides a communication apparatus, which can implement the method in the first aspect or any possible implementation of the first aspect. The apparatus includes modules or units configured to implement the method in the first aspect or any possible implementation of the first aspect. The units or modules included in the apparatus can be implemented by software and/or hardware. The apparatus may be, for example, a radio access network device, or may be a chip, a chip system, or a processor that supports the radio access network device in implementing the foregoing method, or may be a logical module or software that can implement all or some functions of the radio access network device.

According to a third aspect, this application provides a communication apparatus, including a processor, which may be configured to implement the method in the first aspect or any possible implementation of the first aspect by using a logic circuit or executing a code instruction.

Optionally, the communication apparatus further includes a communication interface, and the processor is coupled to the communication interface. The communication interface is configured to receive a signal from a communication apparatus other than the apparatus and transmit the signal to the processor, or send a signal from the processor to a communication apparatus other than the apparatus. For example, the communication interface may be a transceiver, a circuit, a bus, a module, or a communication interface of another type.

Optionally, the communication apparatus further includes a memory, and the processor is coupled to the memory. The memory is configured to store program instructions and data.

Optionally, the communication apparatus is a radio access network device, or a chip, a chip system, or a processor configured in the radio access network device.

According to a fourth aspect, this application provides a computer-readable storage medium. The computer storage medium stores a computer program or instructions, and when the computer program or the instructions are run on a computer, the method in the first aspect or any possible implementation of the first aspect is performed.

According to a fifth aspect, this application provides a computer program product. The computer program product includes a computer program (which may also be referred to as code or instructions), and when the computer program is run, the method in the first aspect or any possible implementation of the first aspect is performed.

It should be understood that the technical solutions of the second aspect to the fifth aspect of this application correspond to the technical solutions of the first aspect of this application. Beneficial effect achieved by the aspects and corresponding feasible implementations is similar, and details are not described again.

### BRIEF DESCRIPTION OF DRAWINGS

FIG. 1 is a diagram of a communication system applicable to a method according to an embodiment of this application;
FIG. 2 is another diagram of a communication system applicable to a method according to an embodiment of this application;
FIG. 3 is still another diagram of a communication system applicable to a method according to an embodiment of this application;
FIG. 4 is a diagram of a neural network model according to an embodiment of this application;
FIG. 5 is a schematic flowchart of a computing task segmentation method according to an embodiment of this application;
FIG. 6 and FIG. 7 are diagrams of segmenting a computing task of a neural network model based on segmentation points at different locations according to embodiments of this application;
FIG. 8 is a schematic flowchart of a computing task segmentation method according to another embodiment of this application;
FIG. 9 and FIG. 10 are block diagrams of communication apparatuses according to embodiments of this application; and
FIG. 11 is a diagram of a structure of a base station according to an embodiment of this application.

### DESCRIPTION OF EMBODIMENTS

The following describes technical solutions of this application with reference to accompanying drawings.

The method provided in this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system, or a new radio access technology (new radio access technology, NR). The 5G mobile communication system may include non-standalone (non-standalone, NSA) and/or standalone (standalone, SA).

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as a vehicle to X (vehicle to X, V2X, where X may represent anything) system. For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions provided in this application may be further applied to a future communication system, for example, a 6th generation (6th Generation, 6G) mobile communication system. This is not limited in this application.

In embodiments of this application, a radio access network (radio access network, RAN) device may be any device having a wireless transceiver function. The radio access network device may be a device that accesses a network by using a 3^{rd} generation partnership project (3^{rd} generation partnership project, 3GPP) technology, for example, including but not limited to a base station (base station), a NodeB (NodeB or NB), an evolved NodeB (evolved NodeB, eNB) in LTE, a gNB or a transmission reception point (transmission reception point, TRP) in a 5G (for example, NR) system, a next generation base station in a 6th generation (6th generation, 6G) mobile communication system, and a base station in a future mobile communication system, may alternatively be a module or unit that completes some functions of the base station, for example, may be a central unit (central unit, CU), or may be a distributed unit (distributed unit, DU). Alternatively, the radio access network device may be a macro base station, a micro base station, a pico base station, a small cell, a balloon station, an indoor station, a relay station, a wireless relay node, a wireless backhaul node, or the like. The radio access network device may alternatively be a device that accesses a network by using a non-3GPP technology, for example, including but not limited to an access point (access point, AP) in a wireless fidelity (wireless fidelity, Wi-Fi) system. It may be understood that, all or some functions of the radio access network device in this application may alternatively be implemented by using a software function running on hardware, or may be implemented by using a virtualization function instantiated on a platform (for example, a cloud platform). A specific form of the radio access network device is not limited in this application.

A core network device may be configured to complete three functions: registration, connection, and session management, and mainly includes a network exposure function (network exposure function, NEF) network element, a policy control function (policy control function, PCF) network element, an application function (application function, AF) network element, an access and mobility management function (access and mobility management function, AMF) network element, a session management function (session management function, SMF) network element, a user plane function (user plane function, UPF) network element, and the like.

The UPF is an interface of a data network, and may complete functions such as user plane data forwarding, session/flow-level charging statistics, and bandwidth limitation. User data may be accessed to a network by using the network element.

The NEF network element may be configured to expose, to the AF network element, a service and a capability provided by a 3GPP network function, and may also enable the AF to provide information for the 3GPP network function.

The AF network element mainly transfers a requirement of an application side for a network side, and may be considered as a proxy of an application server.

The SMF network element mainly performs session management, IP address allocation and management of user equipment, UPF selection, and the like.

The PCF network element mainly performs policy control on a charging policy and a quality of service (quality of service, QoS) policy, and the like.

The AMF network element mainly performs functions such as mobility management and access authentication/authorization. In addition, the AMF network element may be further responsible for transferring a user policy between a terminal device and the PCF.

Network elements communicate with each other through interfaces. For example, an interface between the NEF network element and the AF network element is an N33 interface. A signaling plane interface between the terminal device and the AMF network element is an N1 interface. Because the terminal device cannot directly interact with a core network, non-access stratum (non-access stratum, NAS) information needs to be transparently transmitted through an access stratum (access stratum, AS). A signaling plane interface used by the AMF to request an access network (access network, AN) to allocate a resource to a protocol data unit (protocol data unit, PDU) session and the like is an N2 interface.

The foregoing network elements in the core network device and the interfaces between the network elements are merely examples for description, and shall not constitute any limitation on this application.

The terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may include but is not limited to: a mobile phone (mobile phone), a tablet computer (pad), a computer with a wireless transceiver function, a virtual reality (virtual reality, VR) terminal device, an augmented reality (augmented reality, AR) terminal device, a mixed reality (mixed reality, MR) terminal device, an XR terminal device, a wireless terminal in industrial control (industrial control), a tactile terminal device, an in-vehicle terminal device, a wireless terminal in unmanned driving, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, a video player, a full-series projector, and the like. A specific form of the terminal device is not limited in this application.

The data network (data network, DN) may provide an operator service, Internet access, or a third-party service. In embodiments of this application, the data network includes a server, and may perform encoding, rendering, and the like on a video source.

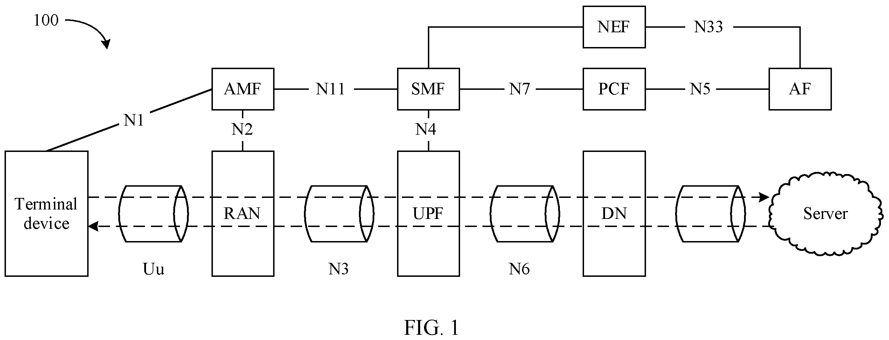

For ease of understanding, the following briefly describes, with reference to FIG. 1, FIG. 2, and FIG. 3, communication systems applicable to the method provided in embodiments of this application.

FIG. 1 is a diagram of a communication system applicable to a method according to an embodiment of this application. The communication system 100 shown in FIG. 1 may include a terminal device, a radio access network device (for example, a RAN shown in the figure), core network devices (for example, a UPF, an SMF, an AMF, a PCF, an NEF, and the like shown in the figure), a data network, and a server. The communication system 100 may be considered as a server-network-terminal device network architecture.

The terminal device may be a VR terminal device, an AR terminal device, an XR terminal device, a video player, a full-series projector, or the like. The terminal device may not only have a function of an application layer device, for example, may collect a user operation, for example, a handle operation or voice control, and generate an action instruction based on the user operation, for example, capture an image or a video; but also have a function of a communication device, for example, perform wireless communication with a radio access network device, transmit an action instruction, an image, a video, and the like from the application layer device to the radio access network device through an air interface, and may transmit data received from the radio access network device to the application layer device. The terminal device may capture an image or a video, and may upload the captured image or video to the server.

For example, a process of transmitting data between the terminal device and the server may be shown in FIG. 1. Uplink data sent by the terminal device arrives at the server through the radio access network device, the core network device (which may be specifically the UPF in the core network device), and the data network. Downlink data sent by the server arrives at the terminal device through the data network, the core network device (for example, the UPF), and the radio access network device.

It should be understood that the devices shown in FIG. 1 are merely examples. For example, in some designs, the terminal device may be separated, for example, divided into an application layer device and a communication device based on different functions. For another example, the application server and the data network may be deployed in an integrated manner. This is not limited in this application.

In addition, FIG. 1 shows an example of interfaces between the network elements. For example, the terminal device communicates with the radio access network device through a Uu interface, and the radio access network device may communicate with the AMF through an N3 interface. Details are not described herein. This is not limited in this application.

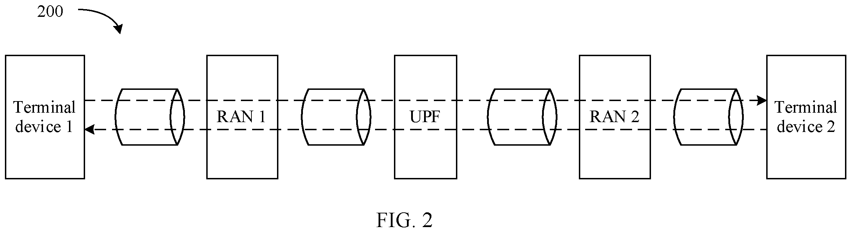

FIG. 2 is another diagram of a communication system applicable to a method according to an embodiment of this application. The communication system 200 shown in FIG. 2 may include a terminal device 1, a terminal device 2, a radio access network device 1 and a radio access network device 2 (a RAN 1 and a RAN 2 shown in the figure), and a core network device, for example, a UPF network element. The communication system 200 may be considered as a terminal device-network-terminal device network architecture.

The system shown in FIG. 2 may be applied to a tactile Internet. A primary domain in the tactile Internet is, for example, the terminal device 1, and may be, for example, an XR terminal or a personal computer. A controlled domain is, for example, the terminal device 2, and may be, for example, a remote control robot or a remote operator. A network domain includes the core network device, the radio access network device 1, and the radio access network device 2. The primary domain includes a tactile user and a human system interface (human system interface, HSI), and the HSI may be responsible for converting an input of the tactile user into tactile data by using a proper tactile coding technology. The tactile data is transmitted to the controlled domain through the network domain. The primary domain may directly control the controlled domain through various command signals, and the controlled domain may also feed back a feedback signal to the primary domain. In addition to a tactile feedback signal, the primary domain may further receive an audio/video feedback signal from the controlled domain. It is not difficult to understand that a relationship between the primary domain and the controlled domain is similar to a relationship between the server and the terminal device described above with reference to FIG. 1.

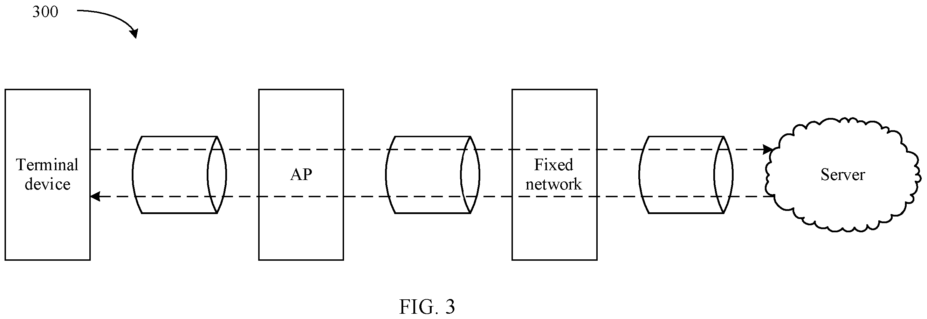

FIG. 3 is still another diagram of a communication system applicable to a method according to an embodiment of this application. As shown in FIG. 3, the communication system 300 may include a terminal device, a radio access network device (an AP shown in the figure), a fixed network, and a server. The communication system 300 may be considered as a server-network-terminal device network architecture. Different from FIG. 1, the network in the network architecture includes the fixed network.

The terminal device may be an XR terminal, a video player, or the like, and the radio access network device may be a Wi-Fi router, a Wi-Fi AP, a set-top box, or the like.

For example, a process of transmitting data between the terminal device and the server may be shown in FIG. 3. Uplink data sent by the terminal device arrives at the server through the radio access network device and the fixed network. Downlink data sent by the server arrives at the terminal device through the fixed network and the radio access network device. The data transmitted between the terminal device and the server may include, for example, XR media data and common video data.

It should be understood that the communication systems shown in FIG. 1 to FIG. 3 are merely examples. This application does not limit a specific architecture of an applicable system, and does not limit a quantity and forms of various devices included in each communication system.

Currently, AI is increasingly widely used in many services. For example, AI may be applied to the communication systems shown in FIG. 1 to FIG. 3, and one or more devices in the communication system may execute a computing task by using a neural network model.

The system shown in FIG. 1 is used as an example. The server may perform target detection and recognition on the received image or video by using the neural network model. To reduce an amount of data uploaded by the terminal device, a computing task of the neural network model may be segmented, so that a part of the computing task is transferred to the terminal device. For example, a computing task for preprocessing an image or a video is transferred to the terminal device. Preprocessing may specifically include feature information extraction, target positioning, image downsampling, and the like. The terminal device may upload data obtained through computation to the server. In comparison with uploading a raw image or video, this reduces an amount of to-be-transmitted data.

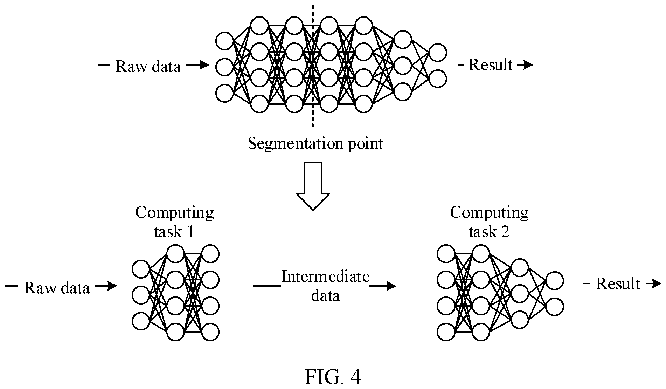

To better understand embodiments of this application, the following describes several terms used in embodiments of this application with reference to FIG. 4.
1. A neural network model is a complex network system including a large quantity of simple processing units (namely, neurons) connected to each other. The neural network model may include a plurality of neural network layers. Based on different categories, neural network models may be classified into a DNN model, a convolutional neural network (convolutional neural network, CNN) model, a recurrent neural network (recurrent neural network, RNN) model, and the like. This application includes but is not limited thereto.
2. A computing task is a task executed by using a neural network model. If a plurality of neural network layers in the neural network model are segmented into a plurality of parts, a computing task corresponding to the neural network model is also segmented into a plurality of computing tasks, for example, denoted as a computing task 1 to a computing task N. In this case, the computing task corresponding to the neural network model may be implemented by executing the computing task 1 to the computing task N (N is an integer greater than 1).

The computing task can be defined based on a service. Different services have different computing tasks. The computing task includes, for example, but is not limited to, target detection, target recognition, target classification, behavior prediction, action decision-making in a control system, and image rendering enhancement. This application includes but is not limited thereto.

FIG. 4 is a diagram of executing a computing task by using a neural network model according to an embodiment of this application. For example, the neural network model shown in FIG. 4 is a DNN model. The DNN model includes a plurality of neural network layers. The figure shows seven neural network layers. The plurality of neural network layers may include one or more convolution layers, one or more pooling layers, one or more fully connected layers, and one or more activation layers. Different neural network layers have different computing features.

As shown in the figure, to-be-processed raw data is input to the DNN model. After computation, the DNN model outputs a result. For example, the to-be-processed raw data may be, for example, an image or a video, and the output result may be, for example, a result obtained by performing target detection on the image or the video. Therefore, the raw data input into the DNN model may be an image or a video, and the data output from the DNN model may be a detection result. A computing task performed by the DNN model may be performing processing such as convolution, pooling, and classification on the input image or video, to obtain a target detection result.

3. A segmentation point is used to segment a plurality of neural network layers of a neural network model, to segment the plurality of neural network layers into a plurality of parts. In this embodiment of this application, the segmentation point may be used to segment a plurality of neural network layers into two parts. In FIG. 4, a dashed line is used to show a segmentation point. It may be understood that when the neural network model includes at least two neural network layers, there may be a plurality of options for the segmentation point, and a location between any two adjacent neural network layers in the plurality of neural network layers may be determined as the segmentation point.

The segmentation point is defined only for ease of description, and may be considered as a location in the neural network model, but does not represent that such a point exists in the neural network model. Segmentation is defined only for ease of understanding, and does not mean that the neural network model is segmented. In a possible design, the neural network model is preconfigured in both of two devices (for example, the terminal device and the server in the system shown in FIG. 1 or FIG. 3, or the terminal device 1 and the terminal device 2 in the system shown in FIG. 2) that are configured to execute a computing task, or the neural network model may be pre-established. Each device may determine, based on the segmentation point, computing tasks at which several layers need to be executed by the device.

Because the neural network model is segmented, the computing task corresponding to the neural network model is also segmented. Therefore, in the following, neural network model segmentation and computing task segmentation are alternately used, and meanings expressed by the two are the same.

4. Raw data, intermediate data, and a result are all data, are defined only for distinguishing different data, and shall not constitute any limitation on this application. The raw data may be data input into a neural network model, and may be specifically data input into an input layer. The result is data output after the raw data is processed by the neural network model, and may be specifically data output from an output layer. The intermediate data may be data output from a neural network layer in the neural network model, and may be specifically data output from a layer other than the input layer and the output layer, for example, may be data output from a convolution layer or a pooling layer. It may be understood that the intermediate data is output when the neural network model is segmented.

5. An amount of to-be-transmitted data refers to a size of data to be transmitted, which can be described by dimensions such as bit and byte. In embodiments of this application, the amount of to-be-transmitted data may be specifically a size of intermediate data that is obtained after a terminal device executes a computing task (for example, a first computing task) and that needs to be transmitted to another device (for example, a first device described below).

6. A computation amount refers to a quantity of operations that need to be performed, for example, a quantity of floating-point operations that need to be performed, or a quantity of additions and multiplications that need to be performed, and may be described by using parameters such as the quantity of floating-point operations, and the quantity of additions and multiplications. In embodiments of this application, the computation amount may be specifically a quantity of operations that need to be performed by a terminal device to execute a computing task (for example, a first computing task).

7. A status of a channel indicates a channel attribute of a communication link. In this embodiment of this application, the status of the channel may be specifically a channel attribute of a wireless communication link. During transmission, a radio signal may be affected by factors such as signal scattering, environment fading, and distance attenuation. Therefore, a rate of transmission may change accordingly. Therefore, the status of the channel may be represented by parameters such as an SINR, an RSRP, and a CQI, and may be used to determine a transmission rate for data transmission on the channel.

When the DNN is used to perform a computing task for target detection and recognition, a computation amount of a neural network layer (for example, a convolution layer or a pooling layer) close to an input side is small, and a computation amount of a neural network layer (for example, a fully connected layer or an activation layer) close to an output side is large. Therefore, a computing task at the neural network layer with the small computation amount may be allocated to a terminal device for execution, and a computing task at the neural network layer with the large computation amount may be allocated to a server for execution. In this way, after the terminal device processes to-be-processed raw data, a data dimension is reduced, and a data amount of output intermediate data is reduced compared with the raw data, that is, an amount of to-be-transmitted data is reduced.

Different services to which a neural network model is applied have different requirements. Some services have a high requirement on a latency, some services have a high requirement on reliability, and some services have a high requirement on both a latency and reliability. Therefore, how to segment the neural network model to meet requirements of different services becomes an urgent technical problem to be resolved.

In view of this, this application provides a computing task segmentation method. A target segmentation point of a computing task is determined via a network device (for example, a radio access network device or a core network device). The network device can obtain a status of a channel between the radio access network device and the terminal device in time, and in particular, the radio access network device can obtain the status of the channel between the radio access network device and the terminal device in real time. Therefore, the network device can effectively adjust the target segmentation point in time based on a latest obtained status of the channel, so that the computing task is segmented more properly, a requirement is met to a greater extent, and user experience is improved.

The following describes in detail a method provided in embodiments of this application with reference to the accompanying drawings.

For ease of understanding, the following points are first described.

First, to clearly describe the technical solutions in embodiments of this application, terms such as "first" and "second" are used in embodiments of this application to distinguish between same items or similar items that provide basically same functions. For example, a first computing task and a second computing task are merely used to distinguish different indication information, and a sequence of the first computing task and the second computing task is not limited. A person skilled in the art may understand that the terms such as "first" and "second" do not limit a quantity or an execution sequence, and the terms such as "first" and "second" do not indicate a definite difference.

Second, in embodiments of this application, terms and English abbreviations, such as a status of a channel, a neural network model, a computing task, a DNN, an SINR, an RSRP, and a CQI, are all examples provided for ease of description, and shall not constitute any limitation on this application. This application does not exclude a possibility of defining another term that can implement a same or similar function in an existing or a future protocol.

Third, "at least one" means one or more, and "a plurality of" means two or more. "And/or" describes an association relationship between associated objects, and indicates that three relationships may exist. For example, A and/or B may indicate the following cases: A exists alone, both A and B exist, and B exists alone, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, and c may indicate: a, b, c, a and b, a and c, b and c, or a, b, and c, where a, b, and c may be singular or plural.

Fourth, the table in embodiments of this application is merely an example, and does not constitute a limitation on the protection scope of this application. For example, values of information in the table are merely examples, and other values may be set. This is not limited in this application. For another example, proper deformation and adjustment such as splitting and combination may be performed based on the foregoing tables. For another example, names of parameters shown in titles of the foregoing tables may alternatively be other names that can be understood by a communication apparatus, and values or representation manners of the parameters may alternatively be other values or representation manners that can be understood by the communication apparatus. For another example, during implementation of the foregoing tables, another data structure, for example, an array, a queue, a container, a stack, a linear table, a pointer, a linked list, a tree, a graph, a structure, a class, a pile, or a hash table, may alternatively be used.

Fifth, "predefinition" or "preconfiguration" may be implemented by pre-storing corresponding code or a corresponding table in a device (for example, including a terminal device and a first device), or in another manner that may indicate related information. A specific implementation of "predefinition" or "preconfiguration" is not limited in this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Sixth, in embodiments of this application, descriptions such as "when", "in a case of", and "if" all mean that a device (for example, a terminal device or an access network device described below) performs corresponding processing in an objective case, and are not intended to limit time, and the device (for example, the terminal device or the access network device described below) is not required to perform a determining action during implementation. This does not mean that there is another limitation.

With reference to embodiments shown in the accompanying drawings, the following shows a computing task segmentation method provided in this application from a perspective of device interaction. The devices are merely examples, and should not constitute any limitation on implementation of the method provided in this application.

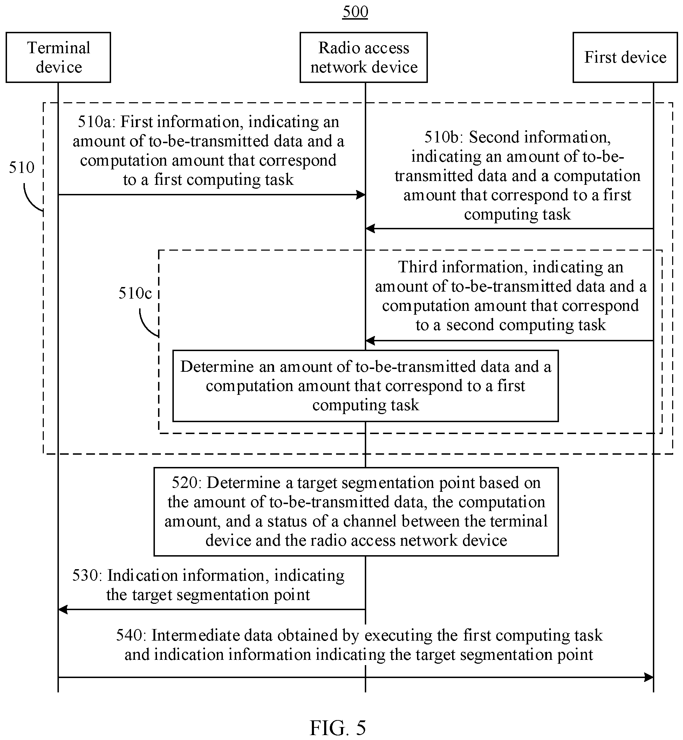

FIG. 5 is a schematic flowchart of a computing task segmentation method 500 according to an embodiment of this application. It may be understood that, in FIG. 5, an example in which a radio access network device, a terminal device, and a first device are used as execution bodies of the interaction example is mainly used to illustrate the method. However, the execution bodies of the interaction example are not limited in this application. For example, the radio access network device in FIG. 5 may alternatively be a chip, a chip system, or a processor that supports the radio access network device in implementing the method, or may be a logical module or software that can implement all or some functions of the radio access network device. The terminal device in FIG. 5 may alternatively be a chip, a chip system, or a processor that supports the terminal device in implementing the method, or may be a logical module or software that can implement all or some functions of the terminal device. The first device in FIG. 5 may alternatively be a chip, a chip system, or a processor that supports the first device in implementing the method, or may be a logical module or software that can implement all or some functions of the first device.

The method 500 shown in FIG. 5 includes step 510 to step 540. The following describes each step in FIG. 5 in detail.

In step 510, the radio access network device obtains an amount of to-be-transmitted data and a computation amount of the terminal device that correspond to a first computing task. The first computing task is obtained by segmenting a computing task of a neural network model based on a segmentation point.

The first computing task may be obtained by segmenting a computing task of a complete neural network model based on a segmentation point. As described above, two computing tasks may be obtained by segmenting the computing task of the neural network model based on the segmentation point. In this embodiment, for ease of differentiation and description, the computing task corresponding to the neural network model is denoted as a computing task A, and two computing tasks obtained by segmenting the computing task A are denoted as the first computing task and a second computing task. The first computing task corresponds to the terminal device, and the second computing task corresponds to another device. The segmentation point used to segment the computing task A into the first computing task and the second computing task is denoted as a segmentation point A.

The another device is a device that communicates with the terminal device, for example, may be the server in FIG. 1 or FIG. 3, or may be another terminal device that is shown in FIG. 2 and that is different from the terminal device. For ease of differentiation and description, the another device is denoted as the first device.

Herein, the first computing task corresponds to the terminal device, and the second computing task corresponds to the first device. It may be understood that it is assumed that the first computing task is allocated to the terminal device for execution, and the second computing task is allocated to the first device for execution. Correspondingly, the amount of to-be-transmitted data and the computation amount that correspond to the first computing task are an amount of to-be-transmitted data and a computation amount that may be generated when the terminal device executes the first computing task.

As shown in 510a in the figure, a possible implementation of obtaining the amount of to-be-transmitted data and the computation amount of the terminal device that correspond to the first computing task is as follows: The terminal device sends first information to the radio access network device, where the first information indicates the amount of to-be-transmitted data and the computation amount that correspond to the first computing task. Correspondingly, the radio access network device receives the first information.

For example, the first information may be carried in radio access control (radio resource control, RRC) signaling. For example, the first information may be specifically user assistant information (user assistant information, UAI) carried in the RRC signaling, or an information element in the UAI. The first information may alternatively be carried in a medium access control (medium access control, MAC)-control element (control element, CE). For example, a newly added MAC-CE is used to carry the first information. Signaling used to carry the first information and a specific name of the first information are not limited in this application.

In this implementation, the amount of to-be-transmitted data and the computation amount that correspond to the first computing task may be obtained by the terminal device through estimation. For example, the terminal device may estimate, based on a quantity of neural network layers corresponding to the first computing task, a quantity of neural network elements, and a corresponding computation type and a quantity of computation times, a quantity of paths (paths) that need to be computed, and therefore may estimate a quantity of computation times that need to be performed, that is, the computation amount corresponding to the first computing task. The terminal device may further estimate, based on the quantity of paths in the neural network corresponding to the first computing task and types and a quantity of neural network elements at the segmentation point, a size of data that may be output, that is, the amount of to-be-transmitted data corresponding to the first computing task.

As shown in 510b in the figure, another possible implementation of obtaining the amount of to-be-transmitted data and the computation amount of the terminal device that correspond to the first computing task is as follows: The first device sends second information to the radio access network device, where the second information indicates the amount of to-be-transmitted data and the computation amount that correspond to the first computing task. Correspondingly, the radio access network device receives the second information from the first device.

**In** this implementation, the amount of to-be-transmitted data and the computation amount that correspond to the first computing task may be obtained by the first device through estimation. A specific manner in which the first device estimates the amount of to-be-transmitted data and the computation amount is similar to that described above, and details are not described again.

As shown in 510c in the figure, still another possible implementation of obtaining the amount of to-be-transmitted data and the computation amount of the terminal device that correspond to the first computing task is as follows: The first device sends third information to the radio access network device, where the third information indicates an amount of to-be-transmitted data and a computation amount that correspond to the second computing task. Correspondingly, the radio access network device receives the third information from the first device.

In this implementation, the amount of to-be-transmitted data and the computation amount that correspond to the second computing task may be obtained by the first device through estimation. After receiving the third information, the radio access network device may estimate an amount of to-be-transmitted data and a computation amount based on the computing task A corresponding to the neural network model, to determine an amount of to-be-transmitted data and a computation amount that correspond to a first neural network. A specific manner in which the first device and the radio access network device estimate the amount of to-be-transmitted data and the computation amount is similar to that described above, and details are not described again.

For example, the second information and the third information may be sent by the server (namely, an example of the first device) to a core network device through an N33 interface, and then the core network device transmits the second information and the third information to the radio access network device through general packet radio service (general packet radio service, GPRS) tunneling protocol-control (GPRS tunneling protocol-control) signaling. Alternatively, the second information and the third information may be sent by the another terminal device (namely, another example of the first device), and carried in signaling like RRC signaling or a MAC-CE. Signaling used to carry the second information and the third information is not limited in this application.

For different services, different neural network models need to be used to execute different computing tasks. Therefore, after each service is initiated, computing task segmentation needs to be performed for a neural network model corresponding to the service. Therefore, when a service is initiated, the terminal device or the first device may estimate an amount of to-be-transmitted data and a computation amount that correspond to any one of two computing tasks obtained by segmenting, based on segmentation points at different locations, a computing task corresponding to a same neural network model, and send the amount of to-be-transmitted data and the computation amount to the radio access network device.

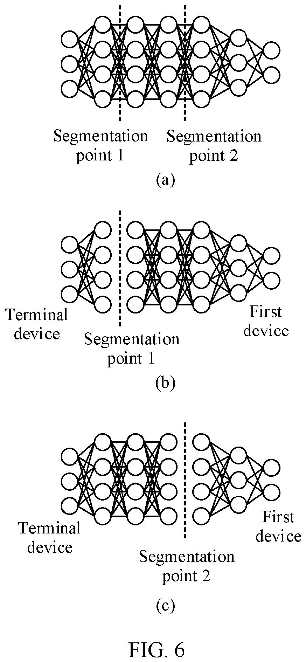

For a same device, for example, the terminal device, when a computing task corresponding to a same neural network model is segmented based on segmentation points at different locations, obtained computing tasks are different. As shown in FIG. 6, if a computing task of a same neural network model is segmented based on a segmentation point 1 (as shown in (a) in FIG. 6), a computing task corresponding to the terminal device and a computing task corresponding to the first device may be obtained, as shown in (b) in FIG. 6. If the computing task of the same neural network model is segmented based on a segmentation point 2 (as shown in (a) in FIG. 6), a computing task corresponding to the terminal device and a computing task corresponding to the first device may be obtained, as shown in (c) in FIG. 6. It can be learned from comparison between (b) and (c) in FIG. 6 that two computing tasks corresponding to the terminal device are different, and two computing tasks corresponding to the first device are also different.

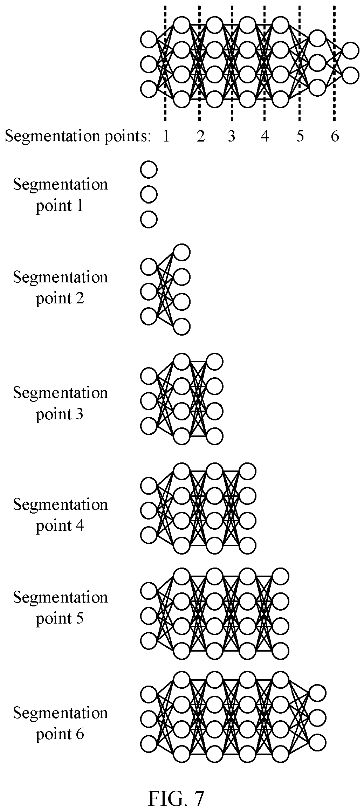

In a possible implementation, after determining a neural network model based on a service, the terminal device or the first device may traverse segmentation points at different locations in the model to segment a computing task of the neural network model, to obtain computing tasks corresponding to the different segmentation points, so as to obtain six computing tasks corresponding to the terminal device, for example, segmentation points 1 to 6 shown in FIG. 7, and neural network layers respectively corresponding to the segmentation points 1 to 6. In this way, amounts of to-be-transmitted data and computation amounts corresponding to the six different computing tasks may be obtained through estimation.

The amounts of to-be-transmitted data and the computation amounts that correspond to the different computing tasks and that are sent by the terminal device or the first device are shown in Table 1.

**Table 1**

| Index of a segmentation point | Amount of to-be-transmitted data | Computation amount |
|---|---|---|
| 1 | X1 | Y1 |
| 2 | X2 | Y2 |
| ... | ... | ... |

It should be understood that the amounts of to-be-transmitted data and the computation amounts that correspond to the different computing tasks and that are shown in FIG. 7 and the table are merely examples. A quantity of segmentation points, a reporting form, and the like are not limited in this application. For example, the first device may also obtain, based on segmentation points at different locations, a plurality of different computing tasks corresponding to the first device, and send, to the radio access network device in a form similar to the foregoing table, an amount of to-be-transmitted data and a computation amount that correspond to each computing task.

It may be understood that, for a same neural network model, each segmentation point and an identifier of the segmentation point are consistent in the terminal device and the first device. The terminal device and the first device may preconfigure the neural network model, or construct the neural network model based on same configuration information, and allocate an identifier to a segmentation point at each location according to a same rule. For example, in the neural network shown in FIG. 7, one segmentation point may be disposed between every two adjacent layers from an input layer to an output layer, and the segmentation points are sequentially numbered 1 to 6. For another example, one segmentation point may be disposed between every several neural network layers in a sequence from the input layer to the output layer, and the segmentation points are sequentially numbered.

A specific implementation in which the terminal device and the first device construct the neural network model based on the same configuration information may be as follows: The terminal device and the first device may negotiate the configuration information according to a neural network data exchange standard, for example, an open neural network exchange (open neural network exchange, ONNX) or another predefined neural network data exchange standard. The configuration information includes a structure and/or a parameter used to construct the test neural network model. The structure may specifically refer to a type of a neural network, for example, a CNN or an RNN. The parameter may specifically include a quantity of layers of the neural network, a type and a weight of each neuron at each neural network layer, and the like. This application includes but is not limited thereto.

Therefore, when performing step 510, the radio access network device may obtain, in a manner of obtaining amounts of to-be-transmitted data and computation amounts that are of the terminal device and that respectively correspond to a plurality of different computing tasks, the amount of to-be-transmitted data and the computation amount that correspond to the first computing task. The plurality of different computing tasks are obtained by segmenting the computing task A of the neural network model based on segmentation points (including the segmentation point A) at different locations, and the plurality of different computing tasks include the first computing task.

In step 520, the radio access network device determines, based on the amount of to-be-transmitted data, the computation amount, and a status of a channel between the terminal device and the radio access network device, that the segmentation point (that is, the segmentation point A) is a target segmentation point.

Data is transmitted between the radio access network device and the terminal device through a wireless channel. Quality of the wireless channel affects a rate and quality of data transmission. Therefore, the radio access network device may frequently send a downlink reference signal to the terminal device to perform downlink channel measurement, or the terminal device may frequently send an uplink reference signal to the radio access network device to perform uplink channel measurement.

In this embodiment of this application, because the terminal device needs to transmit intermediate data to the first device, the radio access network device may determine, in real time, the status of the channel between the radio access network device and the terminal device based on an uplink channel measurement result.

In addition to the status of the channel, the amount of to-be-transmitted data and the computation amount corresponding to the first computing task may also affect completion time and required power consumption of the computing task A.

When a rate of transmission is fixed, a larger amount of to-be-transmitted data indicates more required transmission time and more required power consumption. When a computing capability of the terminal device is fixed, a larger computation amount indicates more required computation time and more required power consumption. Therefore, the radio access network device may determine, based on the foregoing items, whether to determine the segmentation point A as the target segmentation point.

Different services have different requirements. Some services are sensitive to latencies, some services have a high requirement on transmission reliability, some services have a high requirement on power consumption, and some service are used by terminal devices that are sensitive to power consumption. Therefore, the target segmentation point may be determined from different dimensions based on different requirements.

In a possible design, the target segmentation point is determined based on a latency.

If it is assumed that the terminal device executes the first computing task, the latency is time needed by the terminal device to execute the first computing task, and may specifically include a computation latency and a transmission latency that are of executing the first computing task by the terminal device. The computation latency of executing the first computing task by the terminal device is time needed by the terminal device to complete the computation amount of the first computing task, and the transmission latency of executing the first computing task by the terminal device is time needed by the terminal device to transmit the intermediate data obtained by executing the first computing task.

The computation latency of the first computing task may be determined based on the computation amount of the first computing task and the computing capability of the terminal device.

The computation time is related to the computing capability of the terminal device. Therefore, when the target segmentation point is determined based on the latency, the computing capability of the terminal device may be further obtained.

Optionally, before step 520, the method further includes: The radio access network device receives computing capability information from the terminal device, where the computing capability information indicates the computing capability of the terminal device. Correspondingly, the terminal device sends the computing capability information to the radio access network device.

Correspondingly, step 520 may specifically include: The radio access network device determines that the segmentation point is the target segmentation point based on the amount of to-be-transmitted data, the computation amount, the computing capability of the terminal device, and the status of the channel between the terminal device and the radio access network device.

Receiving the computing capability information of the terminal device may be performed after step 510, or may be performed before step 510, or may be performed synchronously with step 510. An execution sequence of the two steps is not limited in this application.

For example, the computing capability information may be carried in RRC signaling. For example, the computing capability information may be specifically carried in a UAI of the RRC signaling, or an information element in the UAI. The computing capability information may alternatively be carried in a MAC-CE. For example, a newly added MAC-CE is used to carry the computing capability information. Signaling used to carry the computing capability information is not limited in this application.

The computing capability information may be at least one of the following: time needed by the terminal device to complete a predefined test task or the computing capability of the terminal device.

Further, the predefined test task includes a task executed based on at least one of a predefined test neural network model, a predefined computation type, or predefined input data. In other words, different terminal devices may perform tests based on a same test task, to obtain time needed by the different terminal devices to complete the same test task, and then computing capabilities of the different terminal devices may be deduced based on the time.

Herein, the test neural network model may be preconfigured in the terminal device, or may be constructed based on predefined configuration information, or may be constructed based on configuration information obtained from another device (for example, the radio access network device or the first device). For related descriptions of the configuration information, refer to the related descriptions in step 510. Details are not described herein again.

The computation type may include an operation type, for example, a matrix operation, and may specifically further include a matrix multiplication operation, a matrix inversion operation, and the like. This application includes but is not limited thereto.

The input data may be data that is input to the test neural network model, that is, to-be-processed data.

The test neural network model, the computation type, and the input data may be, for example, predefined in a protocol. The terminal device performs the test task based on at least one of the items, to obtain the time required for completing the test task.

The computing capability may alternatively be represented by a quantity of floating-point operations per second of the terminal device. The quantity of floating-point operations per second is a peak value of quantities of floating-point operations that can be performed per second. The terminal device may report the quantity of floating-point operations per second to the radio access network device.

A possible implementation in which the terminal device reports the quantity of floating-point operations per second is directly reporting the quantity of floating-point operations per second.

Another possible implementation in which the terminal device reports the quantity of floating-point operations per second is to report information identifying the quantity of floating-point operations per second.

For example, the information identifying the quantity of floating-point operations per second may be a capability level. Different floating-point operations per second may correspond to different capability levels. A correspondence between the quantity of floating-point operations per second and the capability level may be predefined, for example, predefined in a protocol. The terminal device may report, to the radio access network device based on the correspondence, the capability level corresponding to the quantity of floating-point operations per second.

The quantity of floating-point operations per second or the capability level corresponding to the quantity of floating-point operations per second is only one of parameters used to represent the computing capability. A parameter used to represent the computing capability is not limited in this application, and a correspondence may also be established between another parameter and the capability level.

A computation speed of the terminal device may be determined based on the computing capability of the terminal device, and the computation latency of completing the first computing task by the terminal device may be further determined based on the computation amount corresponding to the first computing task.

For example, the computation latency T_{c} satisfies: T_{c}=Q_{c}/R_{c}. Q_{c} represents a computation amount, and R_{c} represents a computation speed. The computation amount corresponding to the first computing task and the computation speed of the terminal device are substituted into the foregoing formula, to obtain the computation latency of executing the first computing task by the terminal device.

Because a power level of the terminal device may decrease with use time, a user may adjust a mode of the terminal device in different power levels, for example, adjust to a power saving mode in a low power level, and the computing capability of the terminal device may also change with the mode. Therefore, the terminal device may periodically send the computing capability information to the radio access network device. In this way, the radio access network device may determine the computation latency based on latest received computing capability information, so that estimation of the computation latency is more accurate.

The transmission latency of the first computing task may be determined based on the amount of to-be-transmitted data of the first computing task and the status of the channel between the terminal device and the radio access network device, for example, may be determined based on the amount of to-be-transmitted data of the first computing task and a rate of transmission between the terminal device and the radio access network device.

The rate of transmission may be, for example, determined by the radio access network device based on a status of a channel at a physical layer and scheduling signaling of a layer 2 that are obtained in real time. Determining the rate of transmission based on the status of the channel is an internal implementation of the radio access network device, and may be implemented by using the conventional technology. Details are not described herein.

For example, the transmission latency Tₜ satisfies: Tt=Qt/Rt. Qₜ represents an amount of to-be-transmitted data, and Rt represents a rate of transmission.

The amount of to-be-transmitted data corresponding to the first computing task and the rate of transmission of the terminal device are substituted into the foregoing formula, to obtain the transmission latency of executing the first computing task by the terminal device.

Based on the computation latency and the transmission latency, the latency T of executing the first computing task by the terminal device may be obtained. That is, T=T_{c}+Tₜ.

As described above, for some low-latency services, the target segmentation point may be determined based on the latency. Therefore, the radio access network device may determine, based on the foregoing latency calculation manner, the latency T corresponding to the first computing task, to determine whether to determine the segmentation point A corresponding to the first computing task as the target segmentation point.

In a possible implementation, a latency threshold is preset for a computing task corresponding to the terminal device. If the latency of the first computing task obtained through segmentation based on the segmentation point A does not exceed the latency threshold, it may be considered that the computing task obtained through segmentation based on the segmentation point A meets a latency requirement, and the segmentation point A may be determined as the target segmentation point.

In another possible implementation, a latency threshold is preset for the computing task A. In this case, not only the latency of the first computing task needs to be estimated, but also a latency of the second computing task needs to be estimated, to determine, based on a value relationship between the latency threshold and a sum of latencies of the first computing task and the second computing task, whether to determine the segmentation point A as the target segmentation point. For example, if the sum of the latencies of the first computing task and the second computing task that are obtained through segmentation based on the segmentation point A does not exceed the latency threshold, it may be considered that the computing task obtained through segmentation based on the segmentation point A meets a latency requirement, and the segmentation point A may be determined as the target segmentation point. If the sum of the latencies of the first computing task and the second computing task that are obtained through segmentation based on the segmentation point A exceeds the latency threshold, it may be considered that the computing task obtained through segmentation based on the segmentation point A does not meet a latency threshold, and the segmentation point A cannot be determined as the target segmentation point.

In still another possible implementation, the computing task A corresponding to the neural network model is segmented based on segmentation points at different locations, to obtain a plurality of different computing tasks corresponding to the terminal device, latencies of the plurality of different computing tasks are separately calculated, and a segmentation point corresponding to a computing task with a lowest latency is determined as the target segmentation point. For example, if the first computing task is the computing task with the lowest latency in the plurality of different computing tasks, the segmentation point A may be determined as the target segmentation point. It may be understood that, computation latencies and transmission latencies of executing different computing tasks by the terminal device may also be calculated with reference to the manner provided above, but amounts of to-be-transmitted data and computation amounts are different.

FIG. 7 is used as an example. Latencies of the computing tasks obtained based on the segmentation point 1 to the segmentation point 6 are separately calculated, and a latency 1 to a latency 6 corresponding to the segmentation point 1 to the segmentation point 6 may be obtained. If the latency 3 corresponding to the segmentation point 3 is the lowest, the segmentation point 3 may be determined as the target segmentation point.

In this embodiment, for ease of description, it is assumed that the segmentation point A is the target segmentation point determined based on the foregoing implementation.

In another possible design, the target segmentation point is determined based on power consumption.

If the terminal device executes the first computing task, the power consumption is power consumption needed by the terminal device to execute the first computing task, and may specifically include computation power consumption and transmission power consumption of the terminal device for executing the first computing task. The computation power consumption of the terminal device for executing the first computing task is power consumption needed by the terminal device for executing the computation amount of the first computing task, and the transmission power consumption of the terminal device for executing the first computing task is power consumption needed by the terminal device for transmitting the intermediate data that is obtained by executing the first computing task.

The computation power consumption of the first computing task is related to the computation amount of the first computing task. The computation power consumption increases with the computation amount.

As described above, the computation amount is related to the quantity of layers of the neural network. For example, the computation power consumption P_{c} satisfies: P_{c}= Σ*ᵢ*P_{c,*i*}. *i* represents an *i*^{th} neural network layer, and P_{c,*i*} represents computation power consumption of the *i*^{th} neural network layer.

The quantity of neural network layers corresponding to the first computing task and computation power consumption of each neural network layer are substituted into the foregoing formula, to obtain the computation power consumption of the terminal device for executing the first computing task. The computation power consumption of each neural network layer may be obtained through calculation based on a quantity of operations needed by each neuron for calculation and a power consumption value needed by each operation in a terminal chip. For example, the computation power consumption may be obtained through calculation based on a quantity of operation times of an adder and a quantity of operation times of a multiplier that are needed by each neuron for calculation, and power consumption values needed by the adder and the multiplier in the terminal chip for each operation. Alternatively, a network device and the terminal device may pre-specify computation power consumption of a typical neural network element, and calculate computation power consumption of each neural network layer based on a neural network structure and a standard.

The transmission power consumption of the first computing task is related to the amount of to-be-transmitted data of the first computing task and the status of the channel. Larger amount of to-be-transmitted data indicates higher power consumption. In addition, because the intermediate data obtained by executing the first computing task by the terminal device needs to be transmitted to the radio access network device through the wireless channel, the transmission power consumption of the terminal device is also related to the status of the channel.

For example, the transmission power consumption Pₜ is related to an amount of to-be-transmitted data required after the computing task is segmented and a current status of a channel. The radio access network device may perform power allocation based on the current status of the channel and the amount of to-be-transmitted data, to determine the transmission power consumption. The transmission power consumption of the first computing task may alternatively be determined by the radio access network device based on the amount of to-be-transmitted data corresponding to the first computing task and the status of the channel obtained in real time. For a specific method for performing, by the radio access network device, power allocation based on the current status of the channel and the amount of to-be-transmitted data, refer to the conventional technology. Details are not described herein.

Based on the computation power consumption and the transmission power consumption, power consumption P for executing the first computing task by the terminal device may be obtained. That is, P=P_{c}+Pₜ.

For some terminal devices that are sensitive to power consumption but have a low requirement on a latency, the radio access network device may determine the target segmentation point based on the power consumption. For example, when the battery level of the terminal device is low, or when a battery capacity of the terminal device used by the user is small, the radio access network device may determine, based on the foregoing power consumption calculation manner, the power consumption P corresponding to the first computing task, to determine whether to determine the segmentation point A corresponding to the first computing task as the target segmentation point.

In a possible implementation, a power consumption threshold is preset for the computing task corresponding to the terminal device. If the power consumption of the first computing task obtained through segmentation based on the segmentation point A does not exceed the power consumption threshold, it may be considered that the computing task obtained through segmentation based on the segmentation point A meets a power consumption requirement, and the segmentation point A may be determined as the target segmentation point.

In another possible implementation, the computing task A corresponding to the neural network model is segmented based on segmentation points at different locations, to obtain a plurality of different computing tasks corresponding to the terminal device, power consumption of the plurality of different computing tasks is separately calculated, and a segmentation point corresponding to a computing task with lowest power consumption is determined as the target segmentation point. For example, if the first computing task is the computing task with the lowest power consumption in the plurality of different computing tasks, the segmentation point A may be determined as the target segmentation point. It may be understood that computation power consumption and transmission power consumption of executing different computing tasks by the terminal device may also be calculated with reference to the manner provided above, but amounts of to-be-transmitted data and computation amounts are different.

In a multi-user scenario, the radio access network device may further consider mutual interference between a plurality of terminal devices in a cell, and adjust transmission power consumption of the terminal device, to reduce interference and obtain better transmission quality. In addition, the radio access network device may further consider total bandwidth in the cell, and adjust the transmission power of the terminal device based on a rate requirement of a model segmentation point, to implement optimal service transmission at a system level.

In still another possible design, the target segmentation point is determined based on the latency and the power consumption.

For descriptions of the latency and the power consumption, refer to the foregoing description. Details are not described herein again. The radio access network device may determine the target segmentation point based on the latency and the power consumption, so that the determined target segmentation point does not cause a large latency or large power consumption for the terminal device.

When determining the target segmentation point based on the latency and the power consumption, the radio access network device may apply different weights to the latency and the power consumption based on a requirement, to obtain a weighted sum of the latency and the power consumption. For example, for a service that has a high requirement on a latency, a higher weight may be applied to the latency; and for a service that has a low requirement on a latency and a terminal device that is sensitive to power consumption, a higher weight may be applied to the power consumption.

For example, the weighted sum of the latency and the power consumption may be represented by using the following formula: αT+βP, where α is a weight of the latency, and 0<α≤1; and β is a weight of the power consumption, and 0<β≤1.

Values of α and β corresponding to different services and different terminal devices may be different. If the radio access network device determines the target segmentation point based on the latency and the power consumption, the radio access network device may determine values of α and β for a corresponding computing task in response to each service initiation, and therefore may calculate a weighted sum of the latency and the power consumption corresponding to the first computing task, to determine whether to determine the segmentation point A corresponding to the first computing task as the target segmentation point.

In a possible implementation, a threshold is preset for the computing task corresponding to the terminal device. If the weighted sum of the latency and the power consumption of the first computing task obtained through segmentation based on the segmentation point A does not exceed the threshold, it may be considered that the computing task obtained through segmentation based on the segmentation point A meets a requirement, and the segmentation point A may be determined as the target segmentation point.

In another possible implementation, the computing task A corresponding to the neural network model is segmented based on segmentation points at different locations, to obtain a plurality of different computing tasks corresponding to the terminal device, weighted sums of latencies and power consumption of the plurality of different computing tasks are separately calculated, and a segmentation point corresponding to a computing task with a lowest weighted sum is determined as the target segmentation point. For example, if the first computing task is the computing task with the lowest weighted sum of the latency and the power consumption in the plurality of different computing tasks, the segmentation point A may be determined as the target segmentation point. It may be understood that, latencies and power consumption of executing different computing tasks by the terminal device may be calculated with reference to the manner provided above, but amounts of to-be-transmitted data and computation amounts are different.

It should be understood that the foregoing specific implementation of determining the target segmentation point based on the latency and/or the power consumption is merely an example. Based on a same concept, a person skilled in the art may further determine the target segmentation point based on the latency and/or the power consumption in another implementation.

In step 530, the radio access network device sends indication information to the terminal device, where the indication information indicates the target segmentation point. Correspondingly, the terminal device receives the indication information.

After determining the target segmentation point, the radio access network device may notify the terminal device of the target segmentation point. The radio access network device may send the indication information to the terminal device. The indication information may specifically include an identifier of the target segmentation point, for example, information that can be used to uniquely identify a segmentation point like an index of the target segmentation point.

For example, the indication information may be carried in the MAC-CE or downlink control information (downlink control information, DCI). Signaling used to carry the indication information is not limited in this application.

In this embodiment, it is assumed that the segmentation point A is the target segmentation point, and the radio access network device may notify the terminal device of the segmentation point A via the indication information.

After determining the first computing task based on the segmentation point A, the terminal device may execute the first computing task, and transmit the intermediate data obtained thereby to the first device. After receiving the intermediate data, the first device further needs to use the intermediate data as an input of the local second computing task to continue to perform computation. Therefore, the first device also needs to determine the second computing task based on the target segmentation point.

As described above, for a same neural network model, each segmentation point and an identifier of the segmentation point are consistent in the terminal device and the first device. Therefore, if the first device can learn of the target segmentation point, the first device may determine the second computing task.

In step 540, the terminal device sends the intermediate data obtained by executing the first computing task and the indication information to the first device. Correspondingly, the first device receives the intermediate data and the indication information.

After receiving the indication information, the first device may determine the target segmentation point, and then determine the second computing task. The first device may use the intermediate data received from the terminal device as the input of the second computing task, and execute the second computing task.

In another implementation, the indication information of the target segmentation point may alternatively be directly sent by the radio access network device to the first device. Optionally, the method further includes: The radio access network device sends the indication information to the first device. Correspondingly, the first device receives the indication information.

It may be understood that, if the radio access network device sends the indication information of the target segmentation point to the first device, the terminal device may not need to send the indication information in step 540, but send only the intermediate data.

In this embodiment of this application, because the radio access network device may determine the target segmentation point based on the amount of to-be-transmitted data and the computation amount of the terminal device that correspond to the first computing task, and the status of the channel between the terminal device and the radio access network device, analysis may be performed from a plurality of perspectives such as transmission and computation power consumption, and transmission and computation latencies, to properly determine the target segmentation point based on different requirements. The radio access network device may obtain the status of the channel between the terminal device and the radio access network device in real time, and a change of the status of the channel may be sensed in milliseconds. Therefore, the target segmentation point can be effectively adjusted in time based on the change of the status of the channel, so that the target segmentation point can be adjusted with the change of the status of the channel. In addition, the radio access network device may further consider mutual interference between a plurality of terminal devices in a cell, and adjust the transmission power consumption of the terminal device, to reduce interference and obtain better transmission quality. In addition, the radio access network device may adjust the transmission power consumption of the terminal device with reference to total bandwidth in the cell and a rate requirement, to implement optimal service transmission at a system level.

The foregoing describes the method provided in this application by using an example in which the radio access network determines the target segmentation point. It may be understood that, in addition to the radio access network, the core network device may also obtain the rate of transmission of the terminal device in real time, and therefore may also be used to determine the target segmentation point. The following describes the method provided in this application by using an example in which the core network device determines the target segmentation point.

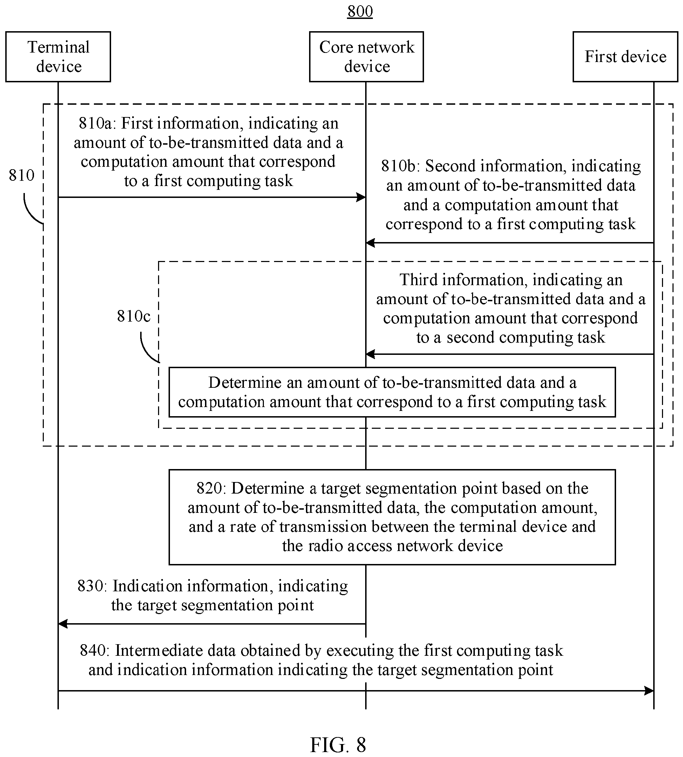

FIG. 8 is a schematic flowchart of a computing task segmentation method 800 according to another embodiment of this application. It may be understood that, in FIG. 8, an example in which a core network device, a terminal device, and a first device are used as execution bodies of the interaction example is mainly used to illustrate the method. However, the execution bodies of the interaction example are not limited in this application. For example, the core network device in FIG. 8 may alternatively be a chip, a chip system, or a processor that supports the core network device in implementing the method, or may be a logical module or software that can implement all or some functions of the core network device. The terminal device in FIG. 8 may alternatively be a chip, a chip system, or a processor that supports the terminal device in implementing the method, or may be a logical module or software that can implement all or some functions of the terminal device. The first device in FIG. 8 may alternatively be a chip, a chip system, or a processor that supports the first device in implementing the method, or may be a logical module or software that can implement all or some functions of the first device.

The method 800 shown in FIG. 8 includes step 810 to step 840. The steps in FIG. 8 are described in detail below.

**In** step 810, the core network device obtains an amount of to-be-transmitted data and a computation amount of the terminal device that correspond to a first computing task. The first computing task is obtained by segmenting a computing task of a neural network model based on a segmentation point.

The following provides an example of an implementation in which the core network device obtains the amount of to-be-transmitted data and the computation amount of the terminal device that correspond to the first computing task.

**In** a possible implementation, the core network device receives first information from the terminal device. The first information indicates the amount of to-be-transmitted data and the computation amount, and may correspond to 810a in the figure.

Because the terminal device is connected to the core network device via a radio access network device, the first information used to carry the amount of to-be-transmitted data and the computation amount may be, for example, NAS signaling.

In another possible implementation, the core network device receives second information from the first device. The second information indicates the amount of to-be-transmitted data and the computation amount, and may correspond to 810b in the figure.

In still another possible implementation, the core network device receives third information from the first device. The third information indicates an amount of to-be-transmitted data and a computation amount that correspond to a second computing task. The core network device determines, based on the amount of to-be-transmitted data and the computation amount that correspond to the second computing task, the amount of to-be-transmitted data and the computation amount that correspond to the first computing task, which may correspond to 810c in the figure.

For example, the second information and the third information may be sent by a server (namely, an example of the first device) to the core network device through an N33 interface, or may be sent by another terminal device (namely, another example of the first device) to the core network device through signaling such as RRC signaling and a MAC-CE.

A specific process of step 810 is similar to step 510 in the foregoing method 500. For details, refer to the foregoing related descriptions. Details are not described herein again.

In step 820, the core network device determines that the segmentation point is a target segmentation point based on the amount of to-be-transmitted data, the computation amount, and a rate of transmission between the terminal device and the radio access network device.

In this embodiment, the core network device is configured to determine the target segmentation point. The core network device may detect an average rate of transmission through a QoS flow configured for a service flow. Therefore, the core network device may alternatively determine the target segmentation point based on the detected average rate of transmission, the amount of to-be-transmitted data, and the computation amount.

Alternatively, the core network device may obtain a status of a channel between the terminal device and the radio access network device from the radio access network device in real time. Therefore, the core network device may determine the rate of transmission between the terminal device and the radio access network device based on the obtained status of the channel, and determine the target segmentation point based on the amount of to-be-transmitted data and the computation amount.

The core network device may determine the target segmentation point based on a latency and/or power consumption.

As described above, the latency includes a computation latency and a transmission latency. The computation latency is related to a computing capability of the terminal device. To determine the computation latency, the computing capability of the terminal device further needs to be obtained. Therefore, optionally, the method further includes: The core network device receives computing capability information from the terminal device, where the computing capability information indicates the computing capability of the terminal device. Correspondingly, the terminal device sends the computing capability information to the core network device.

Correspondingly, step 820 may specifically include: The core network device determines that the segmentation point is the target segmentation point based on the amount of to-be-transmitted data, the computation amount, the computing capability information of the terminal device, and the rate of transmission between the terminal device and the radio access network device.

For example, the computing capability information may be carried in the NAS signaling.

A specific process of step 820 is similar to step 520 in the foregoing method 500. For details, refer to the foregoing related descriptions. Details are not described herein again.

In step 830, the core network device sends indication information to the terminal device, where the indication information indicates the target segmentation point. Correspondingly, the terminal device receives the indication information.

For example, the indication information may be carried in the NAS signaling.

In step 840, the terminal device sends, to the first device, intermediate data obtained by executing the first computing task and the indication information, and correspondingly, the first device receives the intermediate data and the indication information.

Specific processes of steps 830 and 840 are similar to steps 530 and 540 in the foregoing method 500. For details, refer to the foregoing related descriptions. Details are not described herein again.

In this embodiment of this application, because the core network device may determine the target segmentation point based on the amount of to-be-transmitted data and the computation amount of the terminal device that correspond to the first computing task, and the rate of transmission between the terminal device and the radio access network device, analysis may be performed from a plurality of perspectives such as transmission and computation power consumption, and transmission and computation latencies, to properly determine the target segmentation point based on different requirements. The core network device may detect the average rate of transmission based on the QoS flow configured for the service flow, and may obtain, from the radio access network device in real time, the status of the channel between the terminal device and the radio access network device. Therefore, the core network device may also effectively adjust the target segmentation point in time based on a change of the status of the channel, so that the target segmentation point may be adjusted with the change of the status of the channel.

It should be understood that sequence numbers of the steps in FIG. 5 and FIG. 8 do not mean execution sequences. The execution sequences of the processes should be determined based on functions and internal logic of the processes, and should not be construed as any limitation on the implementation processes of embodiments of this application. In addition, the steps in the procedures shown in FIG. 5 and FIG. 8 are merely examples, and do not necessarily mean that each step needs to be performed. Based on a same concept, a person skilled in the art may make a simple change based on the procedure shown in FIG. 5 or FIG. 8, for example, adjust an execution sequence of some steps, or add another step or reduce a step, to implement the method provided in this application. These changes shall fall within the protection scope of this application.

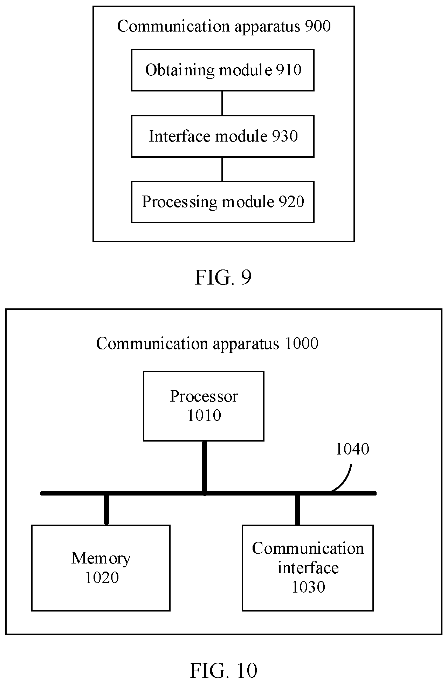

The foregoing describes in detail the methods provided in embodiments of this application with reference to FIG. 5 to FIG. 8. The following describes in detail apparatuses provided in embodiments of this application with reference to FIG. 9 to FIG. 11.

FIG. 9 is a block diagram of a communication apparatus according to an embodiment of this application. As shown in FIG. 9, the communication apparatus 900 may include an obtaining module 910, a processing module 920, and an interface module 930. The communication apparatus 900 may be configured to perform the steps performed by the radio access network device in the computing task segmentation method 500, or may be configured to perform the steps performed by the core network device in the computing task segmentation method 800.

For example, when the apparatus 900 is configured to perform the steps performed by the radio access network device in the method 500, the obtaining module 910 is configured to perform step 510, to obtain an amount of to-be-transmitted data and a computation amount of a terminal device that correspond to a first computing task, where the first computing task is obtained by segmenting a computing task of a neural network model based on a segmentation point; the processing module 920 is configured to perform step 520, to determine that the segmentation point is a target segmentation point based on the amount of to-be-transmitted data, the computation amount, and a status of a channel between the terminal device and the radio access network device; and the interface module 930 is configured to perform step 530, to send indication information to the terminal device, where the indication information indicates the target segmentation point.

When the apparatus 900 is configured to perform the steps performed by the core network device in the method 800, the obtaining module 910 is configured to perform step 810, to obtain an amount of to-be-transmitted data and a computation amount of a terminal device that correspond to a first computing task, where the first computing task is obtained by segmenting a computing task of a neural network model based on a segmentation point; the processing module 920 is configured to perform step 820, to determine that the segmentation point is a target segmentation point based on the amount of to-be-transmitted data, the computation amount, and a rate of transmission between the terminal device and a radio access network device; and the interface module 930 is configured to perform step 830, to send indication information to the terminal device, where the indication information indicates the target segmentation point.

It should be understood that module division in embodiments of this application is an example, and is only logical function division. During actual implementation, there may be another division manner. In addition, functional modules in embodiments of this application may be integrated into one processor, or may exist alone physically, or two or more modules may be integrated into one module. The integrated module may be implemented in a form of hardware, or may be implemented in a form of a software functional module.

FIG. 10 is another block diagram of a communication apparatus according to an embodiment of this application. As shown in FIG. 10, the communication apparatus 1000 may include at least one processor 1010, configured to implement a function of the radio access network device or a function of the core network device in the method provided in embodiments of this application.

The communication apparatus 1000 may further include at least one memory 1020, configured to store program instructions and/or data. The memory 1020 is coupled to the processor 1010. The coupling in this embodiment of this application may be an indirect coupling or a communication connection between apparatuses, units, or modules in an electrical form, a mechanical form, or another form, and is used for information exchange between the apparatuses, the units, or the modules. The processor 1010 and the memory 1020 may operate cooperatively. The processor 1010 may execute the program instructions stored in the memory 1020. At least one of the at least one memory may be included in the processor.

The communication apparatus 1000 may further include a communication interface 1030, configured to communicate with another device via a transmission medium, so that an apparatus used in the communication apparatus 1000 can communicate with the another device. For example, when the communication apparatus 1000 is configured to implement the function of the radio access network device or the function of the core network device in the method provided in embodiments of this application, the another device may include a terminal device and a first device. The communication interface 1030 may be, for example, a transceiver, an interface, a bus, a circuit, or an apparatus that can implement receiving and sending functions. The processor 1010 may receive and send data and/or information through the communication interface 1030, and is configured to implement the method performed by the radio access network device in the embodiment corresponding to FIG. 4 or the method performed by the core network device in the embodiment corresponding to FIG. 8.

For example, when the apparatus 1000 is configured to implement the function of the radio access network device in the method provided in this embodiment of this application, the processor 1010 may be configured to: control the communication interface 1030 to obtain an amount of to-be-transmitted data and a computation amount of a terminal device that correspond to a first computing task, and further determine that the segmentation point is a target segmentation point based on the amount of to-be-transmitted data, the computation amount, and a status of a channel between the terminal device and the radio access network device; and control the communication interface 1030 to send indication information to the terminal device, where the indication information indicates the target segmentation point.

For another example, when the apparatus 1000 is configured to implement the function of the core network device in the method provided in this embodiment of this application, the processor 1010 may be configured to: control the communication interface 1030 to obtain an amount of to-be-transmitted data and a computation amount of a terminal device that correspond to a first computing task, and further determine that the segmentation point is a target segmentation point based on the amount of to-be-transmitted data, the computation amount, and a rate of transmission between the terminal device and a radio access network device; and control the communication interface 1030 to send indication information to the terminal device, where the indication information indicates the target segmentation point.

A specific connection medium between the processor 1010, the memory 1020, and the communication interface 1030 is not limited in embodiments of this application. In this embodiment of this application, in FIG. 10, the processor 1010, the memory 1020, and the communication interface 1030 are connected through a bus 1040. The bus 1040 is represented by a thick line in FIG. 10, and a manner of connection between other components is merely an example for description, and is not limited thereto. The bus may be classified into an address bus, a data bus, a control bus, and the like. For ease of representation, only one thick line is used to represent the bus in FIG. 10, but this does not mean that there is only one bus or only one type of bus.

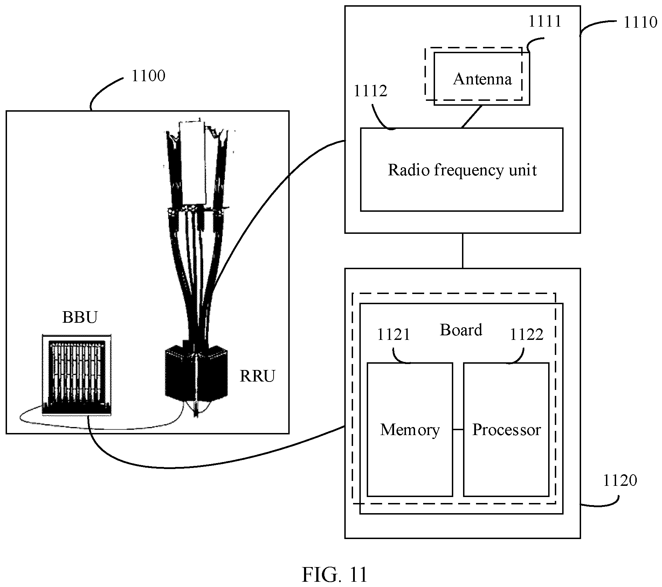

FIG. 11 is a diagram of a structure of a base station according to an embodiment of this application. The base station 1100 shown in FIG. 11 has a function of the radio access network device shown in FIG. 4. The base station 1100 may be applied to the communication systems shown in FIG. 1 to FIG. 3. As shown in FIG. 11, the base station 1100 may include one or more radio frequency units, for example, a remote radio unit (remote radio unit, RRU) 1110 and one or more baseband units (BBU) (which may also be referred to as a distributed unit (distributed unit, DU)) 1120. The RRU 1110 may be referred to as a transceiver unit, and may correspond to the obtaining module 910 and the interface module 930 in FIG. 9, or may correspond to the communication interface 1030 in FIG. 10. Optionally, the RRU 1110 may also be referred to as a transceiver, a transceiver circuit, a transceiver machine, or the like, and may include at least one antenna 1111 and a radio frequency unit 1112. Optionally, the RRU 1110 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The RRU 1110 is mainly configured to receive and send a radio frequency signal and convert a radio frequency signal and a baseband signal, for example, configured to perform an operation procedure of the radio access network device in the foregoing method embodiment, for example, send indication information to a terminal device. The BBU 1120 is mainly configured to perform baseband processing, control a base station, and the like. The RRU 1110 and the BBU 1120 may be physically disposed together, or may be physically disposed separately, namely, a distributed base station.

The BBU 1120 is a control center of the base station, may also be referred to as a processing unit, may correspond to the processing module 920 in FIG. 9 or the processor 1010 in FIG. 10, and is mainly configured to complete a baseband processing function, such as channel coding, multiplexing, modulation, and spectrum spreading. For example, the BBU (the processing unit) may be configured to control the base station to perform an operation procedure related to the radio access network device in the foregoing method embodiment, for example, determining a target segmentation point and generating indication information. Alternatively, the BBU (the processing unit) may be configured to control the base station to perform an operation procedure related to the radio access network device in the foregoing method embodiments.

In an example, the BBU 1120 may include one or more boards. A plurality of boards may jointly support a radio access network (for example, an LTE network) having a single access standard, or may separately support radio access networks (for example, an LTE network, a 5G network, and another network) having different access standards. The BBU 1120 further includes a memory 1121 and a processor 1122. The memory 1121 is configured to store necessary instructions and necessary data. The processor 1122 is configured to control the base station to perform a necessary action, for example, configured to control the base station to perform the operation procedure related to the radio access network device in the foregoing method embodiments. The memory 1121 and the processor 1122 may serve the one or more boards. In other words, a memory and a processor may be disposed on each board. Alternatively, a plurality of boards may share a same memory and a same processor. In addition, a necessary circuit may further be disposed on each board.

It should be understood that the base station 1100 shown in FIG. 11 can implement the processes related to the radio access network device in the method embodiment shown in FIG. 4. Operations and/or functions of the modules in the base station 1100 are respectively intended to implement corresponding procedures in the foregoing method embodiments. For details, refer to the descriptions in the foregoing method embodiments. To avoid repetition, detailed descriptions are properly omitted herein.

When the base station 1100 is configured to perform the operation procedure related to the radio access network device in the foregoing method embodiment, the BBU 1120 may be configured to perform an action implemented internally by the radio access network device, and the RRU 1110 may be configured to perform sending, receiving, and forwarding actions of the radio access network device. For details, refer to the descriptions in the foregoing method embodiments. Details are not described herein again.

It should be understood that the base station 1100 shown in FIG. 11 is merely a possible form of the radio access network device, and shall not constitute any limitation on this application. The method provided in this application is applicable to a radio access network device in another form. For example, the radio access network device includes an active antenna unit (active antenna unit, AAU), and may further include a central unit (central, CU) and/or a DU, or include a BBU and an adaptive radio unit (adaptive radio unit, ARU) or a BBU. A specific form of the radio access network device is not limited in this application.

This application further provides a chip system. The chip system includes at least one processor, configured to implement functions in the method performed by the radio access network device in the embodiment shown in FIG. 4, or enable a computer to perform functions in the method performed by the core network device in the embodiment shown in FIG. 8, for example, receive or process data and/or information in the foregoing method.

**In** a possible design, the chip system further includes a memory, the memory is configured to store program instructions and data, and the memory is located inside or outside the processor.

The chip system may include a chip, or may include a chip and another discrete component.

This application further provides a communication system, including the foregoing radio access network device, the terminal device, and the first device.

This application further provides a communication system, including the foregoing core network device, the terminal device, and the first device.

This application further provides a computer-readable storage medium. The computer storage medium stores a computer program (which may also be referred to as code or instructions). When the computer program is run by a processor, the method performed by the radio access network device in the embodiment shown in FIG. 4 is performed, or the method performed by the core network device in the embodiment shown in FIG. 8 is performed.

This application further provides a computer program product. The computer program product includes a computer program (which may also be referred to as code or instructions). When the computer program is run, a computer is enabled to perform the method performed by the radio access network device in the embodiment shown in FIG. 4, or a computer is enabled to perform the method performed by the core network device in the embodiment shown in FIG. 8.

It should be understood that the foregoing method embodiments may be applied to a processor, or implemented by a processor. The processor may be an integrated circuit chip and has a signal processing capability. In an implementation process, steps in the foregoing method embodiments can be implemented through a hardware integrated logical circuit in the processor, or instructions in a form of software.

The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or any combination thereof. The general-purpose processor may be a microprocessor or any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the field, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

A memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

All or some of the methods provided in the foregoing embodiments may be implemented by using software, hardware, firmware, or any combination thereof. When software is used to implement embodiments, all or a part of the embodiments may be implemented in a form of a computer program product. The computer program product may include one or more computer instructions. When the computer program instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic disk), an optical medium (for example, a DVD), a semiconductor medium (for example, a solid state disk (solid state disk, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A computing task segmentation method, comprising:
obtaining an amount of to-be-transmitted data and a computation amount of a terminal device that correspond to a first computing task, wherein the first computing task is obtained by segmenting a computing task of a neural network model based on a segmentation point;
determining that the segmentation point is a target segmentation point based on the amount of to-be-transmitted data, the computation amount, and a status of a channel between the terminal device and a radio access network device; and
sending indication information to the terminal device, wherein the indication information indicates the target segmentation point.

2. The method according to claim 1, wherein the obtaining an amount of to-be-transmitted data and a computation amount of a terminal device that correspond to a first computing task comprises:
receiving first information from the terminal device, wherein the first information indicates the amount of to-be-transmitted data and the computation amount.

3. The method according to claim 1, wherein the obtaining an amount of to-be-transmitted data and a computation amount of a terminal device that correspond to a first computing task comprises:
receiving second information from a first device, wherein the second information indicates the amount of to-be-transmitted data and the computation amount, and the first device is another terminal device or a server.

4. The method according to claim 1, wherein the obtaining an amount of to-be-transmitted data and a computation amount of a terminal device that correspond to a first computing task comprises:
receiving third information from a first device, wherein the third information indicates an amount of to-be-transmitted data and a computation amount of the first device that correspond to a second computing task, and the first device is another terminal device or a server; and
determining, based on the third information, the amount of to-be-transmitted data and the computation amount that correspond to the first computing task, wherein
the first computing task and the second computing task are obtained by segmenting the computing task of the neural network model based on the segmentation point.

5. The method according to any one of claims 1 to 4, wherein the target segmentation point is determined based on at least one of a latency or power consumption; and
the latency is time needed by the terminal device to execute the first computing task, and the power consumption is power consumption needed by the terminal device to execute the first computing task.

6. The method according to claim 5, wherein the target segmentation point is determined based on the latency; and
the determining that the segmentation point is a target segmentation point based on the amount of to-be-transmitted data, the computation amount, and a status of a channel between the terminal device and a radio access network device comprises:
determining the latency based on computing capability information of the terminal device, the amount of to-be-transmitted data, the computation amount, and the status of the channel; and
determining, based on the latency, that the segmentation point is the target segmentation point.

7. The method according to claim 5, wherein the target segmentation point is determined based on the power consumption; and
the determining that the segmentation point is a target segmentation point based on the amount of to-be-transmitted data, the computation amount, and a status of a channel between the terminal device and a radio access network device comprises:
determining the power consumption based on the amount of to-be-transmitted data, the computation amount, and the status of the channel; and
determining, based on the power consumption, that the segmentation point is the target segmentation point.

8. The method according to claim 5, wherein the target segmentation point is determined based on the latency and the power consumption; and
the determining that the segmentation point is a target segmentation point based on the amount of to-be-transmitted data, the computation amount, and a status of a channel between the terminal device and a radio access network device comprises:
determining the latency and the power consumption based on computing capability information of the terminal device, the amount of to-be-transmitted data, the computation amount, and the status of the channel; and
determining, based on the latency and the power consumption, that the segmentation point is the target segmentation point.

9. The method according to claim 6 or 8, wherein the computing capability information comprises at least one of time needed by the terminal device to complete a predefined test task or a computing capability of the terminal device; and
the predefined test task comprises a task executed based on at least one of a predefined test neural network model, a predefined computation type, or predefined input data.

10. The method according to any one of claims 1 to 9, wherein the method is applied to the radio access network device.

11. A communication apparatus, comprising:
an obtaining module, configured to obtain an amount of to-be-transmitted data and a computation amount of a terminal device that correspond to a first computing task, wherein the first computing task is obtained by segmenting a computing task of a neural network model based on a segmentation point;
a processing module, configured to determine that the segmentation point is a target segmentation point based on the amount of to-be-transmitted data, the computation amount, and a status of a channel between the terminal device and a radio access network device; and
an interface module, configured to send indication information to the terminal device, wherein the indication information indicates the target segmentation point.

12. The apparatus according to claim 11, wherein the obtaining module is specifically configured to receive first information from the terminal device, wherein the first information indicates the amount of to-be-transmitted data and the computation amount.

13. The apparatus according to claim 11, wherein the obtaining module is specifically configured to receive second information from a first device, wherein the second information indicates the amount of to-be-transmitted data and the computation amount, and the first device is another terminal device or a server.

14. The apparatus according to claim 11, wherein the obtaining module is specifically configured to:
receive third information from a first device, wherein the third information indicates an amount of to-be-transmitted data and a computation amount that correspond to a second computing task, and the first device is another terminal device or a server; and
determine, based on the third information, the amount of to-be-transmitted data and the computation amount that correspond to the first computing task, wherein
the first computing task and the second computing task are obtained by segmenting the computing task of the neural network model based on the segmentation point.

15. The apparatus according to any one of claims 11 to 14, wherein the target segmentation point is determined based on at least one of a latency or power consumption; and
the latency is time needed by the terminal device to execute the first computing task, and the power consumption is power consumption needed by the terminal device to execute the first computing task.

16. The apparatus according to claim 15, wherein the target segmentation point is determined based on the latency; and
the processing module is specifically configured to:
determine the latency based on computing capability information of the terminal device, the amount of to-be-transmitted data, the computation amount, and the status of the channel; and
determine, based on the latency, that the segmentation point is the target segmentation point.

17. The apparatus according to claim 15, wherein the target segmentation point is determined based on the power consumption; and
the processing module is specifically configured to:
determine the power consumption based on the amount of to-be-transmitted data, the computation amount, and the status of the channel; and
determine, based on the power consumption, that the segmentation point is the target segmentation point.

18. The apparatus according to claim 15, wherein the target segmentation point is determined based on the latency and the power consumption; and
the processing module is specifically configured to:
determine the latency and the power consumption based on computing capability information of the terminal device, the amount of to-be-transmitted data, the computation amount, and the status of the channel; and
determine, based on the latency and the power consumption, that the segmentation point is the target segmentation point.

19. The apparatus according to claim 16 or 18, wherein the computing capability information comprises one or more of time needed by the terminal device to complete a predefined test task or a computing capability of the terminal device; and
the predefined test task comprises a task executed based on at least one of a predefined test neural network model, a predefined computation type, or predefined input data.

20. The apparatus according to any one of claims 11 to 19, wherein the apparatus is the radio access network device, or the apparatus is configured in the radio access network device.

21. A communication apparatus, comprising a processor and a communication interface, wherein the communication interface is configured to: receive a signal from a communication apparatus other than the apparatus and transmit the signal to the processor, or send a signal from the processor to a communication apparatus other than the apparatus; and the processor is configured to implement the method according to any one of claims 1 to 10 through a logic circuit or by executing program instructions.

22. The apparatus according to claim 21, wherein the apparatus is a radio access network device, or the apparatus is configured in a chip in the radio access network device.

23. A computer-readable storage medium, wherein the storage medium stores a computer program or instructions; and when the computer program or the instructions are executed by a computer, the method according to any one of claims 1 to 10 is implemented.

24. A computer program product, comprising instructions, wherein when the instructions are run by a computer, the method according to any one of claims 1 to 10 is implemented.
